(19) Europäisches Patentamt
European Patent Office
Office européen des brevets

(11) EP 0 514 332 B1

(12) **EUROPÄISCHE PATENTSCHRIFT**

(45) Veröffentlichungstag und Bekanntmachung des Hinweises auf die Patenterteilung:
**17.04.1996 Patentblatt 1996/16**

(51) Int Cl.$^6$: **C07F 9/141**, C08K 5/527

(21) Anmeldenummer: **92810336.5**

(22) Anmeldetag: **07.05.1992**

# (54) Bisphosphite

Bis-phosphites

Bis-phosphites

(84) Benannte Vertragsstaaten:
**BE DE FR GB IT**

(30) Priorität: **16.05.1991 CH 1462/91**

(43) Veröffentlichungstag der Anmeldung:
**19.11.1992 Patentblatt 1992/47**

(73) Patentinhaber: **CIBA-GEIGY AG**
**CH-4002 Basel (CH)**

(72) Erfinder:
- **Andreas, Holger, Dr.**
**W-6142 Bensheim/Auerbach (DE)**
- **Renner, Alfred, Dr.**
**CH-3286 Muntelier (CH)**
- **Zinke, Horst, Dr.**
**W-6101 Reichelsheim/Odw. (DE)**

(56) Entgegenhaltungen:
**DE-B- 1 237 312** **US-A- 3 310 609**
**US-A- 3 412 051** **US-A- 3 737 485**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 514 332 B1

Printed by Jouve, 75001 PARIS (FR)

## Beschreibung

Die vorliegende Erfindung betrifft neue Bisphosphite, Zusammensetzungen enthaltend diese Bisphosphite, sowie die Verwendung der neuen Verbindungen als Stabilisatoren in organischen Materialien.

Organische Phosphite und Phosphonite sind in der Technik als Co-Stabilisatoren, sekundäre Antioxidantien und Verarbeitungsstabilisatoren bekannt. So sind im Taschenbuch der Kunststoff-Additive (Dr. R. Gächter, Dr. H. Müller, 2. Ausgabe, 1983, Seiten 232-236, 9-14 und 22; Carl Hanser Verlag, München, Wien) einige in der Technik verwendete Verbindungen dieser Art beschrieben.
Aus der DE-B-1 237 312 und der US-A-4,206,111 kennt man spiroverknüpfte Bisphosphite, welche als Stabilisatoren für Polyolefine eingesetzt werden.
In der US-A-3,326,939 sind Phosphite, die auf der Basis von 3,3,5,5-Tetrakis(hydroxymethyl)-4-hydroxy-tetrahydropyran hergestellt werden, offenbart. In dieser Publikation wird die Verwendung der Phosphite als Stabilisatoren für PVC-Harze, Polypropylene und andere Polymere, als Flammschutz-Zusätze sowie als Schmieröl-Additive beschrieben.

Es wurde nun gefunden, dass Bisphosphite der unten beschriebenen Formel I überraschend gute Stabilisatoren für organisches Material, insbesondere Verarbeitungsstabilisatoren für synthetische Polymere sind.

Die Erfindung betrifft also Verbindungen der Formel I

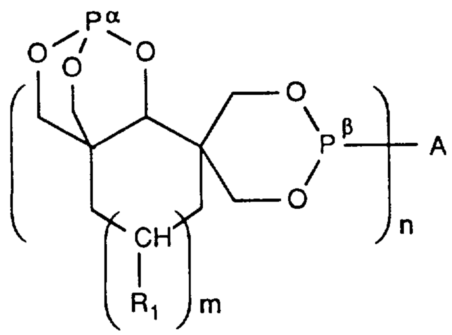
(I),

worin m 0, 1 oder 2 bedeutet,

n für 1 bis 6 steht,
$R_1$ Wasserstoff oder $C_1$-$C_4$-Alkyl darstellt und für den Fall, dass m = 2 ist die Reste $R_1$ gleich oder verschieden sind, und
A für den Rest eines mindestens n-wertigen Alkohols oder Phenols steht, wobei dieser über das (die) alkoholische (n) bzw. phenolische(n) O-Atom(e) an das (die) P-Atom(e) gebunden ist.

$R_1$ als $C_1$-$C_4$-Alkyl steht für Methyl, Ethyl, Propyl, Isopropyl, n-Butyl, Isobutyl oder t-Butyl, vorzugsweise Methyl. $R_1$ ist bevorzugt Wasserstoff.

Mindestens n-wertiger Alkohol oder mindestens n-wertiges Phenol bedeutet, dass der Alkohol bzw. das Phenol ausser den OH-Gruppen, welche mit dem Phosphoratom verestert werden, noch zusätzlich freie OH-Funktionen enthalten kann.

Interessant sind insbesondere Verbindungen der Formel I, worin A, für den Fall, dass n = 1 ist, -$OR_2$ bedeutet, worin

$R_2$ unsubstituiertes oder mit $C_5$-$C_{12}$-Cycloalkyl, Morpholino, Piperidino, Piperazino, $C_6$-$C_{16}$-Alkylcycloalkyl, Tetrahydrofuryl, Phenyl, Phenoxy oder/und -$NR_3R_4$ substituiertes $C_1$-$C_{24}$-Alkyl, durch ein oder mehrere -O-, -S- oder/und -$NR_5$-Einheiten unterbrochenes $C_2$-$C_{24}$-Alkyl, unsubstituiertes oder mit $C_1$-$C_6$-Alkyl substituiertes $C_5$-$C_{12}$-Cycloalkyl, unsubstituiertes oder mit $C_1$-$C_{18}$-Alkyl, Phenyl, Phenyl-$C_1$-$C_4$-Alkyl, Cyclopentyl, Cyclohexyl oder/und $C_2$-$C_4$-Alkenyl substituiertes Phenyl, Naphthyl, Biphenyl oder unsubstituiertes oder mit $C_1$-$C_4$-Alkoxy substituiertes Phenyl-$C_1$-$C_4$-Alkyl bedeutet,
$R_3$ und $R_4$ unabhängig voneinander Wasserstoff, $C_1$-$C_6$-Alkyl, Phenyl oder ($C_1$-$C_4$-Alkyl)phenyl bedeuten,
$R_5$ Wasserstoff, $C_1$-$C_6$-Alkyl oder Phenyl bedeutet,
A für den Fall, dass n = 2 ist, für einen Rest -O-Y-O- steht,
worin Y unsubstituiertes oder mit $R_6$ und/oder $R_7$ substituiertes $C_2$-$C_{20}$-Alkylen, $C_2$-$C_{20}$-Alkenylen, $C_3$-$C_4$-Alkinylen, $C_2$-$C_{20}$-Alkylen, welches durch O-Atome unterbrochen ist, $C_5$-$C_6$-Cycloalkylen, $C_7$-$C_{12}$-Alkylencycloalkylenalkylen, Phenylen, Naphthylen, 3,4-Tetrahydrofurylen,

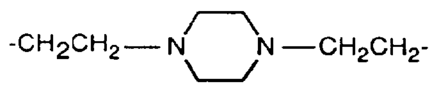

oder einen Rest -X-B-X- bedeutet,
X unsubstituiertes oder mit $C_1$-$C_4$-Alkyl substituiertes $C_1$-$C_{20}$-Alkylen, $C_5$-$C_6$-Cycloalkylen, gegebenenfalls mit $C_1$-$C_4$-Alkyl oder $C_2$-$C_4$-Alkenyl substituiertes Phenylen oder einen Rest

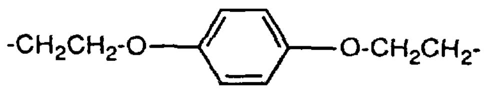

darstellt,
B eine direkte Bindung, $-CR_6R_7-$, -S-, $-SO_2-$ oder $-NR_5-$ bedeutet,
$R_6$ Wasserstoff oder $C_1$-$C_4$-Alkyl darstellt,
$R_7$ Wasserstoff, $C_1$-$C_4$-Alkyl oder $C_2$-$C_{12}$-Alkoxycarbonyl-$C_1$-$C_4$-alkyl bedeutet oder
A für

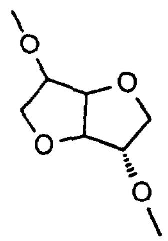 oder 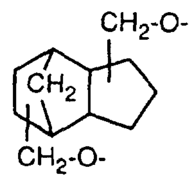

steht,
A, für den Fall, dass n = 3 ist

$N(CH_2CH_2O)_3$—, 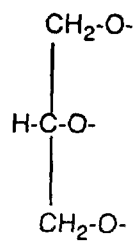 , 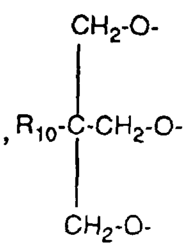 ,

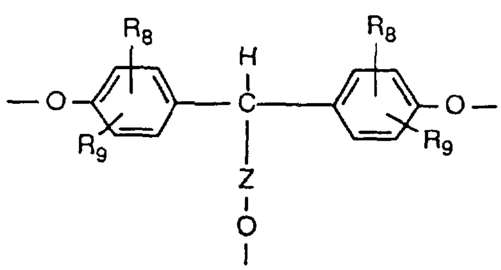 oder 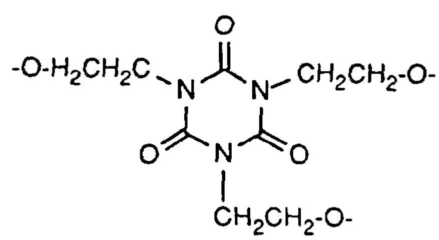

bedeutet,
$R_8$ und $R_9$ unabhängig voneinander für Wasserstoff oder $C_1$-$C_4$-Alkyl stehen,
$R_{10}$ $C_1$-$C_{24}$-Alkyl darstellt und
Z mit 1-4 $C_1$-$C_4$-Alkylgruppen substituiertes Phenylen-($C_1$-$C_4$-alkylen) bedeutet,
A, für den Fall, dass n = 4 ist

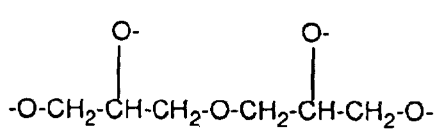 ,

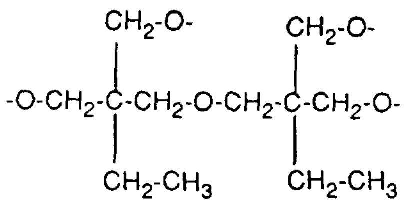, 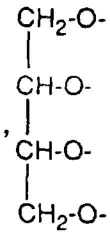 oder 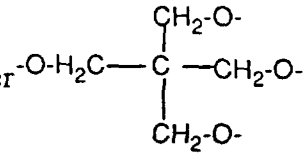

bedeutet und

A, für den Fall, dass n = 5 oder 6 ist

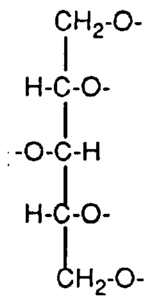, 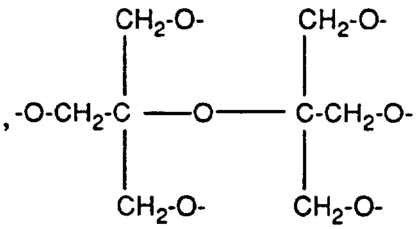 oder

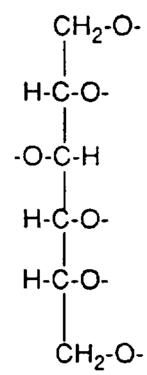

bedeutet.

Stellen die Reste $R_1$ bis $R_{10}$ Alkyl dar, so handelt es sich dabei um verzweigte oder unverzweigte Reste. Der beim Symbol C im Index genannte Zahlenbereich bezieht sich dabei auf die Zahl der möglichen C-Atome.

$R_2$ und $R_{10}$ als $C_1$-$C_{24}$-Alkyl können z.B. Methyl, Ethyl, Propyl, Isopropyl, n-Butyl, Isobutyl, t-Butyl, Pentyl, Isopentyl, Hexyl, Heptyl, Octyl, 2-Ethylhexyl, Nonyl, Decyl, Isodecyl, Undecyl, Dodecyl, Tridecyl, Tetradecyl, Pentadecyl, Hexadecyl, Heptadecyl, Octadecyl, 2-Ethylbutyl, Isoamyl, 1-Methylpentyl, 1,3-Dimethylbutyl, 1,1,3,3-Tetramethylbutyl, 1-Methylhexyl, Isoheptyl, 1-Methylheptyl, 1,1,3-Trimethylhexyl, 1-Methylundecyl, Nonadecyl, Icosyl, Henicosyl, Docosyl, Tricosyl oder Tetracosyl, sein. Bevorzugt sind die Alkylreste mit 4-20 C-Atomen, insbesondere mit 8-15 C-Atomen.

Ist $R_2$ als Alkyl etwa durch -O-, -S- oder -$NR_5$-Einheiten unterbrochen, so finden sich darin z.B. Struktureinheiten wie -$CH_2$-$CH_2$-O-, -$CH_2$-$CH_2$-S- oder -$CH_2$-$CH_2$-$NR_5$-. Die Gruppen -$NR_5$-, -O- bzw. -S- können dabei ein- oder mehrmals in der Kette vorkommen, bevorzugt sind -$CH_2$-$CH_2$-O-Einheiten.

Bedeutet $R_2$ $C_5$-$C_{12}$-Cycloalkyl, zählen beispielsweise dazu Cyclopentyl, Cyclohexyl, Cycloheptyl, Cyclooctyl, Cyclodecyl und Cyclododecyl. Bevorzugt sind Cyclopentyl, Cyclohexyl und Cycloheptyl, besonders bevorzugt ist Cyclohexyl.

Bei dem Begriff Cycloalkyl kann es sich auch um einen Alkylrest, der aus mehreren Cyclen besteht, handeln, beispielsweise bi- oder tricyclische Systeme, z.B. Tricyclodecyl oder Bicycloheptyl.

Mit $C_1$-$C_4$-Alkyl substituiertes Cycloalkyl ist z.B. 1- bis dreifach, vorzugsweise einfach substituiert. Substituenten sind beispielsweise Methyl-, Ethyl-, Propyl- oder Butylgruppen, sowie Isomere von Propyl und Butyl.

$R_2$ als mit $C_1$-$C_{18}$-Alkyl substituiertes Phenyl kann z.B. bedeuten: Methylphenyl, Dimethylphenyl, Trimethylphenyl, Ethylphenyl, Diethylphenyl, Isopropylphenyl, t-Butylphenyl, Di-t-butylphenyl, Methyl-di-t-butylphenyl, Pentylphenyl, Octylphenyl, Nonylphenyl, Dodecylphenyl oder Octadecylphenyl. Die Zahl der Alkylgruppen beträgt insbesondere 1-3, z.B.

1 oder 2. Die Gesamtzahl der C-Atome aller Alkylsubstituenten ist insbesondere 1-12.

$R_2$ als mit Phenyl-$C_1$-$C_4$-alkyl substituiertes Phenyl ist beispielsweise Benzylphenyl, Phenylethylphenyl, 3-Phenylpropylphenyl, α-Methylbenzylphenyl oder α,α-Dimethylbenzylphenyl.

$R_2$ als Naphthyl steht für 1- oder 2-Naphthyl.

$R_2$ als Phenyl-$C_1$-$C_4$-alkyl bedeutet z.B. Benzyl, Phenylethyl, 3-Phenylpropyl, α-Methylbenzyl oder α,α-Dimethylbenzyl, insbesondere Benzyl.

$R_3$ - $R_5$ als $C_1$-$C_6$-Alkyl bedeuten beispielsweise Methyl, Ethyl, Propyl, Isopropyl, n-Butyl, Isobutyl, t-Butyl, Pentyl oder Hexyl, vorzugsweise Methyl.

$R_3$ und $R_4$ als ($C_1$-$C_4$-Alkyl)phenyl stellen beispielsweise mit 1-4, vorzugsweise 1-3 oder 1-2, insbesondere einer Alkylgruppe substituiertes Phenyl dar. Z.B. Tolyl, Xylyl, Mesityl, tert-Butylphenyl, Ethylphenyl oder Isopropylphenyl, vorzugsweise Tolyl.

$R_6$ - $R_9$ als $C_1$-$C_4$-Alkyl bedeuten z.B. Methyl, Ethyl Propyl, Isopropyl, n-Butyl, Isobutyl oder t-Butyl, vorzugsweise Methyl oder t-Butyl.

$R_6$ und $R_7$ bedeuten insbesondere Wasserstoff oder Methyl.

$R_7$ als $C_2$-$C_{12}$-Alkoxycarbonyl-$C_1$ -$C_4$-alkyl bedeutet z. B. etwa Methoxycarbonylmethyl, Methoxycarbonylethyl, Methoxycarbonylpropyl, Methoxycarbonylbutyl, Ethoxycarbonylmethyl, Ethoxycarbonylethyl, Ethoxycarbonylpropyl, Ethoxycarbonylbutyl, Butoxycarbonylmethyl, Butoxycarbonylethyl, Decyloxycarbonylmethyl, Decyloxycarbonylethyl, Dodecyloxycarbonylethyl oder Dodecyloxycarbonylmethyl, bevorzugt Alkoxycarbonylethyl.

X und Y als $C_1$-$C_{20}$-Alkylen stellen beispielsweise Methylen, Ethylen, Propylen, Butylen, Pentylen, Hexylen, Heptylen, Octylen, Nonylen, Decylen, Dodecylen, Tridecylen, Tetradecylen, Pentadecylen, Hexadecylen, Heptadecylen, Octadecylen, Nonadecylen oder Icosylen dar. Als mit $R_6$ und/oder $R_7$ substituiertes Alkylen ist Y bevorzugt mit $C_1$-$C_4$-Alkyl, insbesondere Methyl, substituiert. X als mit $C_1$-$C_4$-Alkyl substituiertes Alkylen ist bevorzugt mit Methyl oder t-Butyl, insbesondere Methyl, substituiert.

Ist Y durch O-Atome unterbrochenes $C_2$-$C_{20}$-Alkylen, so finden sich darin z.B. Struktureinheiten wie $-CH_2-CH_2-O-$. Die -O-Atome können dabei ein- oder mehrmals in der Kette vorkommen.

Y in der Bedeutung von $C_2$-$C_{20}$-Alkenylen kann beispielsweise Ethenylen, Propenylen, Butenylen, Pentenylen, Hexenylen, Heptenylen, Octenylen, Nonenylen, Decenylen, Dodecenylen, Tridecenylen, Tetradecenylen, Pentadecenylen, Hexadecenylen, Heptadecenylen, Octadecenylen, Nonadecenylen oder Icosenylen sein. Die entsprechenden Alkenylen-Einheiten können ein- oder mehrfach, insbesondere ein- bis dreifach, vorzugsweise einfach ungesättigt sein.

Y als $C_3$-$C_4$-Alkinylen steht für Propinylen oder Butinylen.

X und Y in der Bedeutung von $C_5$-$C_6$-Cycloalkylen stellen Cyclopentylen oder Cyclohexylen dar.

Y als $C_7$-$C_{12}$-Alkylencycloalkylenalkylen bedeutet z.B. einen durch Cycloalkylen-Einheiten unterbrochenen Alkylenrest. Die Cycloalkylen-Einheiten sind vorzugsweise Cyclopentylen und Cyclohexylen, insbesondere Cyclohexylen. Es handelt sich also beispielsweise um alternierende Ethylen- und Cyclohexylengruppen, oder alternierende Methylen- und Cyclohexylengruppen, insbesondere um Methylencyclohexylenmethylen. Bei dem Begriff Cycloalkylen kann es sich auch um einen Alkylenrest, der aus mehreren Cyclen besteht, handeln, beispielsweise um bi- oder tricyclische Systeme, z.B. Tricyclodecylen oder Bicycloheptanylen, bevorzugt Tricyclodecylen.

X als mit $C_1$-$C_4$-Alkyl substituiertes Phenylen stellt beispielsweise mit 1-4, vorzugsweise 1-3 oder 1-2, insbesondere einer Alkylgruppe substituiertes Phenylen dar. Z.B. Tolylen, Xylylen, Mesitylen, tert-Butylphenylen, Ethylphenylen oder Isopropylphenylen, vorzugsweise Tolylen.

Ist Z mit 1-4 $C_1$-$C_4$-Alkylgruppen substituiertes Phenylen-($C_1$-$C_4$-alkylen), so können die Alkylgruppen beispielsweise den Phenylenring oder/und die Alkyleneinheit substituieren. Als $C_1$-$C_4$-Alkylsubstituenten kommen z.B. Methyl, Ethyl, Propyl, Isopropyl, Butyl, Isobutyl oder t-Butyl, vorzugsweise Methyl und t-Butyl, in Frage. Die Alkyleneinheit besteht aus 1-4 C-Atomen, bevorzugt 2 oder 3.

$C_2$-$C_4$-Alkenyl-Substituenten sind beispielsweise Vinyl, Allyl, 2-Methylprop-l-en-1-yl, But-1-en-1-yl, But-2-en-2-yl, But-2-en-1-yl, But-3-en-1-yl oder But-3-en-2-yl, vorzugsweise Vinyl oder Allyl.

Von besonderem Interesse sind Verbindungen der Formel I, worin m = 1 ist.

Bevorzugt sind auch Verbindungen der Formel I, worin n = 1 ist.

Interessant sind Verbindungen der Formel I, worin $R_2$ unsubstituiertes oder mit Phenyl substituiertes $C_1$-$C_{24}$-Alkyl, $C_2$-$C_{16}$-Alkyl welches durch ein oder mehrere -O-, -S- oder -NH-Einheiten unterbrochen sein kann, unsubstituiertes oder mit $C_1$-$C_4$-Alkyl substituiertes $C_5$-$C_{10}$-Cycloalkyl, unsubstituiertes oder mit $C_1$-$C_{18}$-Alyyl Phenyl oder Phenyl-$C_1$-$C_4$-Alkyl substituiertes Phenyl, Naphtyl oder Phenyl-$C_1$-$C_4$-alkyl bedeutet.

Weiterhin bevorzugt sind Verbindungen der Formel I, worin $R_2$ unsubstituiertes oder mit Phenyl substituiertes $C_4$-$C_{20}$-Alkyl, $C_4$-$C_{12}$-Alkyl welches durch ein oder mehrere -O-, -S- oder -NH-Einheiten unterbrochen sein kann, unsubstituiertes oder mit $C_1$-$C_4$-Alkyl substituiertes $C_6C_{10}$-Cycloalkyl, unsubstituiertes oder mit $C_1$-$C_{12}$-Alkyl, Phenyl oder Phenyl-$C_1$-$C_4$-alkyl substituiertes Phenyl oder Phenyl-$C_1$-$C_4$-alkyl bedeutet.

Ebenfalls interessant sind Verbindungen der Formel I, worin n > 1 ist, A für einen Rest -O-Y-O- steht,

worin Y unsubstituiertes oder mit $R_6$ und/oder $R_7$ substituiertes $C_2$-$C_{20}$-Alkylen, $C_2$-$C_{20}$-Alkylen, welches durch O-Atome unterbrochen ist,
$C_7$-$C_{12}$-Alkylencycloalkylenalkylen, Phenylen, Naphthylen oder einen Rest -X-B-X-bedeutet,
X unsubstituiertes oder mit $C_1$-$C_4$-Alkyl substituiertes $C_1$-$C_{20}$-Alkylen, gegebenenfalls mit $C_1$-$C_4$-Alkyl oder $C_2$-$C_4$-Alkenyl substituiertes Phenylen darstellt,
B eine direkte Bindung, $-NR_5-$, -S- oder $-CR_6R_7-$ bedeutet,
oder A für

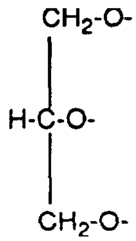 , 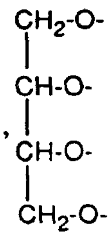 , 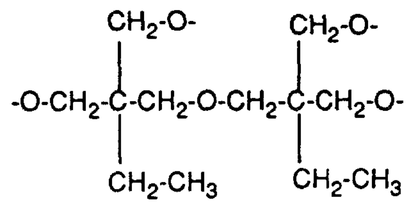 , 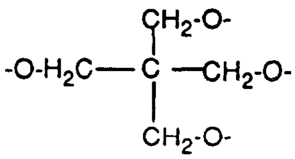 ,

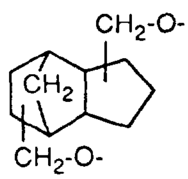 oder 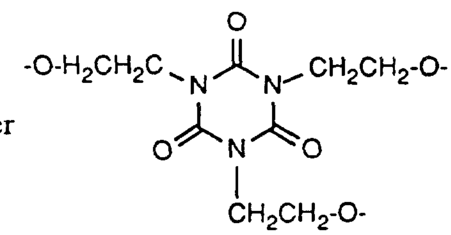

steht.

Bevorzugte Verbindungen sind weiterhin Verbindungen der Formel I, worin A den Rest eines n-wertigen linearen oder cyclischen Zuckers bedeutet, wobei nicht alle OH-Gruppen des Zuckers mit einem Bisphosphit-Rest verestert sind.

Als Zucker kommen z.B. Sorbit, Anhydrosorbit, Dianhydrosorbit, Erythrit, Xylit oder Inosit in Frage.

Gegenstand der Erfindung sind auch Verbindungen erhältlich durch Umsetzung von Verbindungen der Formel II

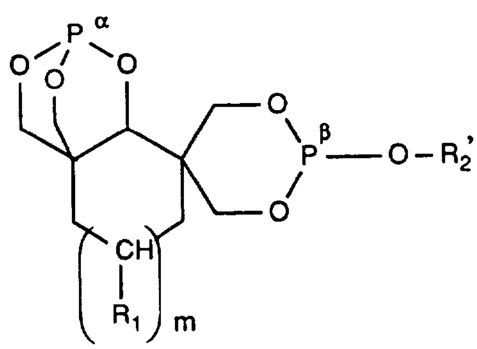 (II),

worin m 0, 1 oder 2 bedeutet, $R_1$ Wasserstoff oder $C_1$-$C_4$-Alkyl darstellt und für den Fall, dass m = 2 ist die Reste $R_1$ gleich oder verschieden sind und $R_2'$Phenyl,
$C_1$-$C_{12}$-Alkylphenyl oder $C_1$-$C_4$-Alkyl bedeutet,
mit einer Polyetherpolyol- oder Polyether/esterpolyol-Verbindung, wobei die Hydroxyfunktionen der Polyetherpolyol- oder Polyether/esterpolyol-Verbindung teilweise oder vollständig mit dem Rest

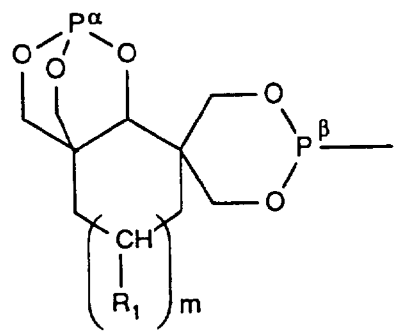

verestert sind.

Polyetherpolyole sind beispielsweise in Ullmanns Encyclopädie der technischen Chemie, 4. Aufl. Bd. 19, Verlag Chemie GmbH, Weinheim 1980, S. 31-38 und S. 304, 305 beschrieben und können beispielsweise durch Reaktion eines Starters mit Alkylenoxiden, z. B. mit Ethylen-, Propylen- oder Butylenoxiden, oder Tetrahydrofuran erhalten werden. Unter Polyether/esterpolyolen sind solche verzweigten Polyole zu verstehen, die sowohl Ether- als auch Ester-Gruppierungen enthalten, wie z.B. Desmophen® 1140, 1145,1150 und 1155 der Fa. BAYER AG. Bevorzugt werden trifunktionelle verzweigte Polyether auf Basis von Propylenoxid verwendet. Die OH-Zahlen der verwendeten Polyether- bzw. Polyether/esterpolyole liegen beispielsweise zwischen 10-1000, z.B. 20-1000, insbesondere 30-800, bevorzugt 30-700.

Die Herstellung von weiteren geeigneten Polyetherpolyolen ist der DE-A-40 21 962 zu entnehmen.

Bevorzugt sind Verbindungen, worin die Polyetherpolyol- oder Polyether/esterpolyol-Verbindung ein Polyol auf Basis von Propylenoxid ist.

Insbesondere bevorzugt sind Verbindungen, worin m 1 und $R_1$ Wasserstoff ist.

Die Herstellung der erfindungsgemässen Verbindungen erfolgt entsprechend den Standardmethoden zur Herstellung von Phosphorigsäuretriestern. Diese Standardmethoden sind z.B. in Houben-Weyl, Methoden der organischen Chemie XII/2, 73-78 (1964) veröffentlicht. Die Verbindungen werden also beispielsweise aus Triphenylphosphit durch Umesterung mit z.B. Tetramethylolcyclohexanol und entsprechenden Alkoholen, Alkylphenolen, Di- bzw. Polyolen oder Polyether- bzw. Polyether/esterpolyolen hergestellt.

Die Verbindungen lassen sich also beispielsweise in zwei Schritten herstellen:

(a) Veresterung von 2,2,6,6-Tetramethylolcyclohexanol bzw. analogen Verbindungen und
(b) Umesterung des Reaktionsproduktes.

Im ersten Schritt wird 2,2,6,6-Tetramethylolcyclohexanol bzw. eine analoge Verbindung beispielsweise mit einem Triaryl- oder Trialkylphosphit im stöchiometrischen Verhältnis 1:2 umgesetzt:

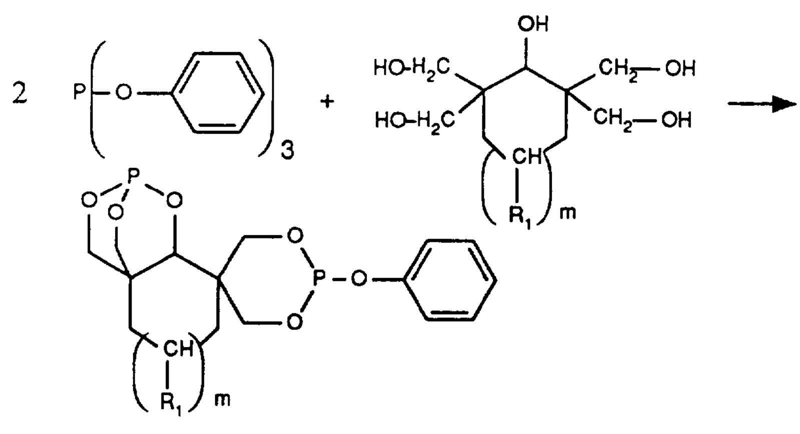

Im Umesterungsschritt wird nun die Phenylgruppe durch einen anderen Rest ersetzt, indem das Reaktionsprodukt mit einem entsprechenden mono- bi- oder polyfunktionellen Alkohol, Alkylphenol oder Polyetherpolyol bzw. Polyether/esterpolyol unter Abspaltung von Phenol weiter zu dem entsprechenden Bisphosphit reagiert (Bei der Umsetzung mit einem Trialkylphosphit kann sich der Umesterungsschritt erübrigen):

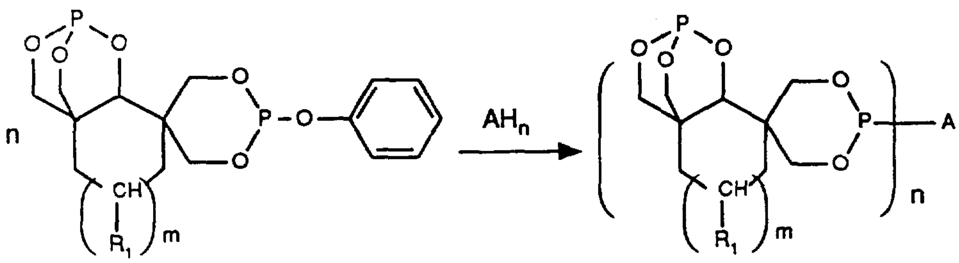


Die beiden Reaktionsschritte werden zweckmässig in Gegenwart einer Base, z.B. einem Alkalimetallalkoholat, wie etwa Kalium- oder Natriummethanolat, Kalium- oder Natriumethanolat, Natrium- oder Kalium-tert-butanolat oder Lithiumamid ausgeführt. Die Reaktionstemperatur kann beispielsweise zwischen 70-160 °C, vorzugsweise 90-120 °C, liegen.
Die Reaktionszeiten bewegen sich je nach Temperatur und spezifischer Reaktion beispielsweise zwischen 1-5 , vorzugsweise 2-3 Stunden.
Der Umesterungsschritt kann gegebenenfalls in einem inerten organischen Lösungsmittel, beispielsweise einem aliphatischen oder aromatischen Kohlenwasserstoff, z.B. Pentan, Hexan, Cyclohexan, Benzol, Toluol, Xylol ausgeführt werden.

Die Ausgangsprodukte zur Herstellung der erfindungsgemässen Verbindungen sind allgemein bekannt. Triphenylphosphit ist beispielsweise als ®IRGAFOS TPP (Ciba-Geigy) im Handel erhältlich.
Die Synthese von 2,2,6,6-Tetramethylolcyclohexanol ist z.B. in Organic Syntheses, Bd. IV, 907-9 (Wiley & Sons,Inc., New York, London) erläutert. Die zu 2,2,6,6-Tetramethylolcyclohexanol analogen Verbindungen lassen sich auf gleichem Wege aus den entsprechenden cyclischen Ketonen herstellen.

Zur Herstellung der erfindungsgemässen Bisphosphite können beispielsweise die nachstehend genannten Alkohole, Alkylphenole, Polyole oder Polyetherpolyole bzw. Polyether/esterpolyole Verwendung finden:

n-Butanol, n-Hexanol, n-Octanol, 2-Ethylhexanol, iso-Butylakohol, iso-Amylalkohol, iso-Octylalkohol, n-Decanol, n-Dodecylalkohol, Myristylalkohol, Stearylalkohol, 2-Butyloctanol-1, 2-Hexyloctanol-1, Cetylalkohol, 2-Butyldecanol-1, 2-Hexyldodecanol-1, 2-Octyldodecanol-1, n-Icosanol-1, n-Docosanol-1, 3,3-Dimethylbutanol-1, Pentadecanol-1, Tridecanol-1, 2,6,8-Trimethylnonanol-4, 4-Methylpentanol-2, 2,6-Dimethylheptanol-4, 3,4,5 -Trimethylheptanol-1, Tetramethylnonanol-1, Dimethylhexanol-1, 2,4-Dimethylpentanol-3, 3-Thiahexanol, Ethyltriglykol, Butylglykol, Butyldiglykol, Butyltriglykol, Ethylthioethanol, Ethylenglykolmonoethylether, 1-Morpholinopropanol-2, 3-Dimethylaminopropanol-1, 2-[N,N-Phenyl-methyl]-ethanolamin, 1 -Diethylaminobutanol-2, 3-Phenyloxypropanol-1, Methyldiglykol, 2-Ethylbutanol-1, 2,3-Dimethylbutanol-1, Cyclohexanol, Cyclododecanol, 8-Hydroxy-tricyclo-[5.2.1.$0^{2,6}$]-decan, 3,3,5-Trimethylcyclohexanol, 2-Dibutylaminoethanol, 2-Butylaminoethanol, 2-Hexadecanol, Heptanol-4, 3,3,5-Trimethylhexanol-1, 2- [N,N-Ethyl-o-methylphenyl]-ethanolamin, Ethylenglykolmono-n-butylether, Cyclooctanol, 4-tert-Butylcyclohexanol, 4-tert-Amylcyclohexanol, 2-tert-Butylcyclohexanol, 2-iso-Propyl-5-methylcyclohexanol, Cyclopentanol, Dimethylisopropanolamin, Tricyclodecylcarbinol, 1-Cyclohexylethanol, Cyclohexylcarbinol, 2-Cyclohexylpropanol-1, Tetrahydrofurfurylalkohol, 4-tert-Butylhydroxymethylcyclohexan, Benzylalkohol, Phenylmethylcarbinol, 2-Phenylpropanol-1, o-Tolylalkohol, 2-Phenylethanol, 3-Cyclohexyl-propanol-1, 1,7,7-Trimethyl-bicyclo-[2.2.1]-heptanol-2, 4-Methoxybenzylalkohol, 2-Phenoxyethanol, 3,7-Dimethyloctanol-3, Methyltriglykol, Polyethylenglykolmonobutylether, 2-Cyclohexylethanol, 2-Methoxyethanol,

m-Kresol, Benzylphenol, p-tert-Octylphenol, Nonylphenol, Dodecylphenol, 2-tert-Butyl-4-methylphenol, o-sec-Butylphenol, iso-Octylphenol, 2,4,6-Trimethylphenol, Dinonylphenol, Ethylphenol, 2,4(2,5)-Dimethylphenol-Gemisch, p-tert-Butylphenol, o-Cyclohexylphenol, 2-Cyclohexyl-4-methylphenol, p-Cumylphenol, 2,4-Di-tert-butylphenol, 2,4-Di-tert-amylphenol, Isopropylphenol, o-Phenylphenol, p-Phenylphenol, o-Allylphenol, 2-tert-Butyl-4-methylphenol, 2,4-Dimethyl-6-ethylphenol, 2-Isopropyl-5-methylphenol, 2-tert-Butyl-5-methylphenol, 2-tert-Butyl-4,5-dimethylphenol, 1-Naphthol, 2-Naphthol, 2,4-Di-tert-butyl-5-methylphenol, p-tert-Octyl-o-tert-butylphenol, 2-tert-Butyl-4-dodecylphenol, 5-Isopropyl-3-methylphenol, 3,5-Di-tert-butylphenol, 3-Pentadecylphenol,

Butandiol-1,4, Pentandiol-1,5, Hexandiol-1,6, 3-Methylpentandiol-1,5, Cyclohexandiol-1,4, 1,4-Bishydroxymethyl-cyclohexan, 2,2'-Bis-[4-hydroxycyclohexyl]-propan, Decandiol-1,10, Propylenglykol, Dodecandiol-1,12, Dipropylenglykol, 2,2'-Bis-[4-hydroxyphenyl]-propan, 2,2'-Bis-[4-hydroxy-3-allylphenyl]-propan, 3,4-Dihydroxyfuran, N-Butyl-bis-ethanolamin, N,N-Bishydroxyethylamin, 2,2,4-Trimethylhexandiol-1,6, 1,6, Bishydroxyethylsulfon, 4,4'-Dihydroxybiphenyl, Diethylenglykol, Triethylenglykol, Tetraethylenglykol, Polyethylenglykol-300, Polyethylenglykol-400, Bis[4-hydroxylphenyl]-sulfid, Bis[4-hydroxyphenyl]-sulfon, Bis-2-hydroxyethyl-sulfon, Thiodiglykol, Bis-hydroxymethyl-tricyclodecan, 2-Methylpentandiol-2,4, Triisopropanolamin,

Di-trimethylolpropan, Trishydroxyethylisocyanurat, -Phenyldiethanolamin, Diisopropanolamin, Dianhydrosorbit, Erythrit, Xylit, Inosit, Triethanolamin, 2-Methyl-2,4-pentandiol, 2,2-Ethyl-butylpropandiol-1,3, 4,4-Bis[4-hydroxyphenyl]-valeriansäureester, Polyethylenglykol-200, Polyethylenglykol-600, Polypropylenglykol-P-400, 1,5-Dihydroxynaphthalin, 2,7-Dihydroxynaphthalin, Thiodipropylenglykol, Anhydrosorbit, Pentaerythrit, Dipentaerythrit, 1,1-Bis [4′-hydroxy-5′-tert-butyl-2′-methylphenyl]butan, Glycerin, 4,4′-Thio-bis[3-methyl6-tert-butylphenol], 1,1,3-Tris [2′-methyl-4′-hydroxy-5′-tert-butylphenyl]-butan, Desmophen® 550 U, Desmophen® 1155 U (Fa. BAYER AG), Voranol® CP 455, Voranol® CP 755, Voranol® CP 255 (Fa. DOW Chemical Corp.), Lupranol® 3421 (Fa. BASF).

Die Verbindungen der Formel I und die wie oben beschrieben durch Umesterung mit Polyetherpolyolen bzw. Polyether/esterpolyolen erhältlichen Verbindungen eignen sich hervorragend zum Stabilisieren von organischen Materialien gegen lichtinduzierten, thermischen oder/und oxidativen Abbau.
Die Verbindungen wirken durch den chemisch gebundenen Phosphor auch flammhemmend. Die Verbindungen weisen eine gute Stabilität gegen Hydrolyse auf.

Gegenstand der Erfindung sind auch Zusammensetzungen enthaltend ein gegen lichtinduzierten, thermischen oder/und oxidativen Abbau empfindliches organisches Material und mindestens eine Verbindung der Formel I oder eine wie oben beschrieben durch Umesterung mit Polyetherpolyolen bzw. Polyether/esterpolyolen erhältliche Verbindung bzw. die Verwendung von Verbindungen der Formel I oder von wie oben beschrieben durch Umesterung mit Polyetherpolyolen bzw. Polyether/esterpolyolen erhältlichen Verbindungen als Stabilisatoren für organische Materialien gegen die genannten Abbauarten.

Beispiele für solche Materialien sind:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B. Klebrigmacherharze).

4. Polystyrol, Poly-(p-methylstyrol), Poly-($\alpha$-methylstyrol).

5. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol oder $\alpha$-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhalrige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethem, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Polym-phenylen-isophthalamid. Block-Copolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamid-systeme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.

29. Wässrige Emulsionen natürlicher oder synthetischer Kautschuke, wie z.B. Naturkautschuk-Latex oder Latices von carboxylierten Styrol-Butadien-Copolymeren.

Vorzugsweise handelt es sich bei den zu schützenden organischen Materialien um natürliche, halbsynthetische oder bevorzugt synthetische organische Materialien. Besonders bevorzugt sind thermoplastische Polymere, insbesondere Polyolefine, beispielsweise Polyvinylchlorid (PVC), Polyethylen, insbesondere Hochdruckpolyethylen (HDPE) und Polypropylen (PP).
In den erfindungsgemässen Zusammensetzungen sind die Verbindungen der Formel I bzw. die wie oben beschrieben durch Umesterung mit Polyetherpolyolen bzw. Polyether/esterpolyolen erhältlichen Verbindungen zweckmässig zu 0,01 bis 10, beispielsweise zu 0,05 bis 5, vorzugsweise zu 0,05 bis 3, insbesondere jedoch zu 0,1 bis 2 Gew.-% enthalten. Es kann sich dabei um eine oder mehrere der Verbindungen der Formel I handeln, und die Gewichtsprozentangaben beziehen sich auf die gesamte Menge dieser Verbindungen. Berechnungsgrundlage ist dabei das Gesamtgewicht des organischen Materials ohne die Verbindungen der Formel I.
Die Einarbeitung in die Materialien kann beispielsweise durch Einmischen oder Aufbringen der erfindungsgemässen Verbindungen und gegebenenfalls weiterer Additive nach den in der Technik üblichen Methoden erfolgen. Handelt es sich um Polymere, insbesondere synthetische Polymere, kann die Einarbeitung vor oder während der Formgebung, oder durch Aufbringen der gelösten oder dispergierten Verbindungen auf das Polymere, gegebenenfalls unter nachträglichem Verdunsten des Lösungsmittels erfolgen. Im Fall von Elastomeren können diese auch als Latices stabilisiert werden. Eine weitere Möglichkeit der Einarbeitung der erfindungsgemässen Verbindungen in Polymere besteht in deren Zugabe vor, während oder unmittelbar nach der Polymerisation der entsprechenden Monomeren bzw. vor der Vernetzung. Die erfindungsgemässen Verbindungen können dabei als solche, aber auch in encapsulierter Form (z.B in Wachsen, Ölen oder Polymeren) zugesetzt werden. Im Falle der Zugabe vor oder während der Polymerisation können die erfindungsgemässen Verbindungen auch als Regulatoren für die Kettenlänge der Polymeren (Kettenabbrecher) wirken.

Die erfindungsgemässen Verbindungen der Mischungen davon können auch in Form eines Masterbatches, der diese Verbindungen beispielsweise in einer Konzentration von 2,5 bis 25 Gew.-% enthält, den zu stabilisierenden Kunststoffen zugesetzt werden.

Zweckmässig kann die Einarbeitung der erfindungsgemässen Verbindungen nach folgenden Methoden erfolgen:

- als Emulsion oder Dispersion (z.B. zu Latices oder Emulsionspolymeren)
- Als Trockenmischung während des Vermischens von Zusatzkomponenten oder Polymermischungen
- durch direktes Zugeben in die Verarbeitungsapparatur (z.B. Extruder, Innenmischer usw.)
- als Lösung oder Schmelze.

Erfindungsgemässe Polymerzusammensetzungen können in verschiedener Form angewendet bzw. zu verschiedenen Produkten verarbeitet werden, z.B. als (zu) Folien, Fasern, Bändchen, Formmassen, Profilen, Giessharzen, Laminaten oder als Bindemittel für Lacke, als Bindemittel für die Herstellung von Honigwabenstrukturen, Klebstoffe, z.B. Strukturklebstoffe für Metalle und Kunststoffe oder Kitte.

Wie bereits erwähnt, handelt es sich bei den zu schützenden organischen Materialien um organische, vorzugsweise synthetische, Polymere. Besonders vorteilhaft werden dabei thermoplastische Materialien geschützt, insbesondere Polyolefine. Vor allem ist dabei die ausgezeichnete Wirksamkeit der erfindungsgemässen Verbindungen, insbesondere derjenigen der Formel I, als Verarbeitungsstabilisatoren (Hitzestabilisatoren) hervorzuheben. Zu diesem Zweck werden sie vorteilhaft vor oder während der Verarbeitung des Polymeren diesem zugesetzt.

Aber auch weitere Polymere (z.B. Elastomere) oder Schmierstoffe bzw. Hydraulikflüssigkeiten können gegen Abbau, z.B. lichtinduzierten oder/und thermooxidativen Abbau stabilisiert werden. Elastomere sind der obigen Aufzählung von möglichen organischen Materialien zu entnehmen.

Die in Frage kommenden Schmierstoffe und Hydraulikflüssigkeiten basieren beispielsweise auf mineralischen oder synthetischen Ölen oder Mischungen davon. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) und in "Ullmanns Enzyklopädie der technischen Chemie", Bd. 13, Seiten 85-94 (Verlag Chemie, Weinheim, 1977) beschrieben.

Die Erfindung betrifft auch ein Verfahren zum Schützen von organischem Material gegen oxidativen, thermischen und/oder actinischen Abbau, dadurch gekennzeichnet, dass man diesem Material als Stabilisatoren Verbindungen der Formel I oder eine wie oben beschrieben durch Umesterung mit Polyetherpolyolen bzw. Polyether/esterpolyolen erhältliche Verbindung zusetzt bzw. auf dieses aufbringt.

Zusätzlich zu den erfindungsgemässen Verbindungen können die erfindungsgemässen Zusammensetzungen, insbesondere wenn sie organische, vorzugsweise synthetische, Polymere enthalten, noch weitere übliche Additive enthalten. Beispiele für solche Additive sind:

<u>1. Antioxidantien</u>

<u>1.1. Alkylierte Monophenole,</u> z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Ditert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.

<u>1.2. Alkylthiomethylphenole,</u> z.B. 2,4-Di-octylthiomethyl-6-tert.-butylphenol, 2,4-Dioctylthiomethyl-6-methylphenol, 2,4-Di-octylthiomethyl-6-ethylphenol, 2,6-Di-dodecylthiomethyl-4-nonylphenol.

<u>1.3. Hydrochinone und alkylierte Hydrochinone,</u> z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol, 2,6-Di-tert. -butyl-hydrochinon, 2,5-Di-tert.-butyl-4-hydroxyanisol, 3,5-Di-tert.-butyl-4-hydroxyanisol, 3,5-Di-tert.-butyl-4-hydroxyphenyl-stearat, Bis-(3,5-di-tert.-butyl-4-hydroxyphenyl)adipat.

<u>1.4. Hydroxylierte Thiodiphenylether,</u> z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol), 4,4'-Thio-bis-(3,6-di-sec.-amylphenol), 4,4'-Bis(2,6-dimethyl-4-hydroxyphenyl)-disulfid.

<u>1.5. Alkyliden-Bisphenole,</u> z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert butyl-2-methylphenol), 1,1 -Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methyl-phenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methyl-benzyl)-6-tert.butyl-4-methylphenyl]-terephthalat, 1,1-Bis-(3,5-dimethyl-2-hydroxyphenyl)-butan, 2,2-Bis-(3,5-di-tert.-butyl-4-hydroxyphenyl)-propan, 2,2-Bis-(5-tert.-butyl-4-hydroxy-2-methylphenyl)-4-n-dodecylmercapto-butan, 1,1,5,5-Tetra-(5-tert.-butyl-4-hydroxy-2-methylphenyl)-pentan.

1.6. O-,N- und S-Benzylverbindungen, z.B. 3,5,3',5'-Tetra-tert.-butyl-4,4'-dihydroxydibenzylether, Octadecyl-4-hydroxy-3,5-dimethylbenzyl-mercaptoacetat, Tris-(3,5-ditert.-butyl-4-hydroxybenzyl)-amin, Bis-(4-tert.-butyl-3-hydroxy-2,6-dimethylbenzyl)-dithioterephthalat, Bis-(3,5-di-tert.-butyl-4-hydroxybenzyl)-sulfid, Isooctyl-3,5-di-tert.-butyl-4-hydroxybenzyl-mercaptoacetat.

1.7. Hydroxybenzylierte Malonate, z.B. Dioctadecyl-2,2-bis-(3,5-di-tert.-butyl-2-hydroxybenzyl)-malonat, Dioctadecyl-2-(3-tert.-butyl-4-hydroxy-5-methylbenzyl)-malonat, Didodecylmercaptoethyl-2,2-bis-(3,5-di-tert.-butyl-4-hydroxybenzyl)-malonat, Di-[4-(1,1,3,3-tetramethylbutyl)-phenyl]-2,2-bis-(3,5-di-tert.-butyl-4-hydroxybenzyl)-malonat.

1.8. Hydroxybenzyl-Aromaten, z.B. 1,3,5-Tris-(3,5-di-tert.-butyl-4-hydroxybenzyl)-2,4,6-trimethylbenzol, 1,4-Bis-(3,5-di-tert.-butyl-4-hydroxybenzyl)-2,3,5,6-tetramethylbenzol, 2,4,6-Tris-(3,5-di-tert.-butyl-4-hydroxybenzyl)-phenol.

1.9. Triazinverbindungen, z.B. 2,4-Bis-octylmercapto-6-(3,5-di-tert.-butyl-4-hydroxyanilino)-1,3,5-triazin, 2-Octylmercapto-4,6-bis-(3,5-di-tert.-butyl-4-hydroxyanilino)-1,3,5-triazin, 2-Octylmercapto-4,6-bis-(3,5-di-tert.-butyl-4-hydroxyphenoxy)-1,3,5-triazin, 2,4,6-Tris-(3,5-di-tert.-buty1-4-hydroxyphenoxy)-1,2,3-triazin, 1,3,5-Tris-(3,5-ditert.-butyl-4-hydroxybenzyl)-isocyanurat, 1,3,5-Tris-(4-tert.-butyl-3-hydroxy-2,6-dimethylbenzyl)-isocyanurat, 2,4,6-Tris-(3,5-di-tert.-butyl-4-hydroxyphenylethyl)-1,3,5-triazin, 1,3,5-Tris-(3,5-di-tert.butyl-4-hydroxyphenylpropionyl)-hexahydro-1,3,5-triazin, 1,3,5-Tris-(3,5-dicyclohexyl-4-hydroxybenzyl)-isocyanurat.

1.10. Benzylphosphonate, z.B. Dimethyl-2,5-di-tert.-butyl-4-hydroxybenzylphosphonat, Diethyl-3,5-di-tert.-butyl-4-hydroxybenzylphosphonat, Dioctadecyl-3,5-di-tert.-butyl-4-hydroxybenzylphosphonat, Dioctadecyl-5-tert.-butyl-4-hydroxy-3-methylbenzylphosphonat, Ca-Salz des 3,5-Di-tert.-butyl-4-hydroxybenzyl-phosphonsäure-monoethylesters.

1.11. Acylaminophenole, z.B. 4-Hydroxy-laurinsäureanilid, 4-Hydroxystearinsäureanilid, N-(3,5-di-tert.butyl-4-hydroxyphenyl)-carbaminsäureoctylester.

1.12. Ester der β-(3,5-Di-tert.butyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.13. Ester der β-(5-tert.Butyl-4-hydroxy-3-methylphenyl)-propionsäure mit ein-oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.14. Ester der β-(3,5-Dicyclohexyl-4-hydroxyphenyl)-propionsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl- 1 -phospha-2,6,7-trioxabicyclo-[2.2.2]-octan.

1.15. Ester der 3,5-Di-tert.-butvl-4-hydroxyphenylessigsäure mit ein- oder mehrwertigen Alkoholen, wie z.B. mit Methanol, Ethanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.16. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.-butyl-4-hydroxyphenylpropionyl)-trimethylendiamin, N,N'-Bis-(3,5-di-tert.butyl-4-hydroxyphenylpropionyl)-hydrazin.

2. UV-Absorber und Lichtschutzmittel

2.1. 2-(2'-Hydroxyphenyl)-benztriazole, wie z.B. 5'-Methyl-, 3',5'-Di-tert.butyl-, 5'-tert.-Butyl-, 5'-(1,1,3,3-Tetramethylbutyl)-, 5-Chlor-3,5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-, Mischung aus 5-Chlor-3'-tert.-butyl-5'-(2-octyloxycarbonylethyl)- und 5-Chlor-3'-tert.-butyl-5'-[2-(2-ethylhexyloxy)-carbonylethyl]-, 5-Chlor-3'-tert.-butyl-5'-(2-methoxycarbonylethyl)-, 3'-tert.-Butyl-5'-(2-methoxycarbonylethyl)-, 3'-tert.-Butyl-5'-(2-octyloxycarbonylethyl)-, 3'-tert.-Butyl-5'-[2-(2-ethylhexyloxy)-carbonylethyl]-, 3'-Dodecyl-5'-methyl- und 3'-tert.-Butyl-5'-(2-isooctyloxycarbonylethyl)-2'-hydroxyphenyl-2H-benztriazol(2), 2,2'-Methylen-bis[4-(1,1,3,3-tetramethylbutyl)-6-benztriazol-2-yl-phenol]; Umesterungsprodukt von 2-[3'-tert.-Butyl-5'-(2-methoxycarbonylethyl)-2'-hydroxy-phenyl]-2H-benztriazol mit Polyethylenglycol 300;

$$[R-CH_2CH_2-COO(CH_2)_3]_2-$$

mit R=3'-tert.-Butyl-4'-hydroxy-5'-2H-benzotriazol-2-yl-phenyl.

2.2. 2-Hydroxvbenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butyl-benzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester, 3,5-Di-tert.-butyl-4-hydroxybenzoesäure-octadecylester, 3,5-Di-tert.-butyl-4-hydroxybenzoesäure-2-methyl-4,6-di-tert.-butylphenylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert.butyl-4-hydroxybenzyl-malonsäure-bis(1,2, 2,6,6-pentamethyl-piperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-dichlor- 1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethylpiperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert.-butyl-benzyl)-malonat, 3-n-Octyl-7,7,9,9-tetramethyl-1,3,8-triazasprio[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor- 1,3,5-triazin, Kondensationsprodukt aus 2-Chlor-4,6-di-(4-n-butylamino-2,2,6,6-tetramethylpiperidyl) 1,3,5-triazin und 1,2-Bis-(3-aminopropylamino)äthan, Kondensationsprodukt aus 2-Chlor-4,6-di-(4-n-butylamino- 1,2,2,6,6-pentamethylpiperidyl)- 1,3,5-triazin und 1,2-Bis-(3-aminopropylamino)-äthan, 8-Acetyl-3-dodecyl-7,7,9,9-tetramethyl-1,3,8-triazaspiro-[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.

2.7. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o- und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)- 1,3,5 -triazin, 2- [2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazi n, 3-Salicyloylamino-1,2,4-triazol, -triazol, Bis-(benzyliden)-oxalsäure-dihydrazid, Oxanilid, Isophthalsäure-dihydrazid, Sebacinsäure-bis-phenylhydrazid, N,N'-Diacetal-adipinsäure-dihydrazid, N,N'-Bis-salicyloyl-oxalsäure-dihydrazid, N,N'-Bis-salicyloyl-thiopropionsäure-dihydrazid.

4. Weitere Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Bis-(2,6-di-tert.-butyl-4-methylphenyl)-pentaerythritdiphosphit, Bis-isodecyloxy-pentaerythritdiphosphit, Bis-(2,4-di-tert.-butyl-6-methylphenyl)-pentaerythritdiphosphit, Bis-(2,4,6-tri-tert.-butylphenyl)-pentaerythritdiphsophit, Tristearyl-sorbit-triphosphit, Tetrakis-(2,4-di-tert.butylphenyl)-4,4'-biphenylen-diphosphonit, 6-Isooctyloxy-2,4,8,10-tetra-tert.-butyl- 12H-dibenz[d,g]-1,3,2-dioxaphosphocin, 6-Fluor-2,4,8,10-tetra-tert.-butyl-12 methyl-dibenz [d,g]-1,3,2-dioxaphosphocin.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Die nachfolgenden Beispiele erläutern die Erfindung weiter. Alle Teile- und Prozentangaben beziehen sich darin - ebenso wie in der übrigen Beschreibung - auf das Gewicht, sofern nicht anders angegeben.

Beispiel 1: Decyl*-tetramethylolcyclohexanol-bisphosphit (= Verbindung der Formel I, worin $R_1$ = H, m = n = 1, $R_2$ = Decyl*)

A) Ein Gemisch aus 496,5 g Triphenylphosphit, 176,1 g 2,2,6,6-Tetramethylolcyclohexanol und 2,6 g Natriummethylat wird unter Rühren auf 110 °C aufgeheizt, während 3 Stunden bei dieser Temperatur gehalten und anschliessend durch Vakuum-Destillation von freigesetztem Phenol

* Gemisch isomerer Decylalkohole

befreit. Man erhält 98 % der Theorie an Phenyl-tetramethylolcyclohexanol-bisphosphit.

B) Dazu werden 126,6 g Decanol und weitere 2,6 g Natriummethylat gegeben. Die Reaktionsmischung wird auf 110 °C geheizt und weitere 3 Stunden bei dieser Temperatur gerührt. Das freigesetzte Phenol wird anschliessend im Vakuum abdestilliert und das erhaltene Produkt nach Zusatz von 2 g Filterhilfsmittel klarfiltriert. Es resultieren 298,2 g (86 % d. Th.) des Titelproduktes als braune, viskose Flüssigkeit, die einen Brechungsindex $n_D^{20}$ = 1,5125 aufweist.

| | | |
|---|---|---|
| Elementaranalyse: | P | ber.: 14,26 %<br>gef.: 14,28 % |

$^{31}$P-Kernresonanz-Spektrum (aufgenommen in Deuterochloroform):

| | |
|---|---|
| $P^{\alpha}$ | 94,4 ppm |
| $P^{\beta}$ | 123,5 ppm |

Beispiele 2 - 6:

Die Verbindungen der Beispiele 2 - 6 werden analog zu der Verbindung des Beispiels 1 hergestellt, wobei die Umesterung mit einem dem Rest A entsprechenden Alkohol erfolgt. Die erhaltenen Verbindungen der Formel 1, worin m = 1 und $R_1$ = H, sowie deren Charakteristika sind in der folgenden Tabelle 1 aufgeführt.

Tabelle 1

| Bsp. | A | n | Ausbeute [%] | $n_D^{20}$/Smp. [°C] |
|---|---|---|---|---|
| 2 | $C_4H_9$-O-$C_2H_4$-O-$C_2H_4$-O- | 1 | 72 | 1,5105 |
| 3 | $C_4H_9$-CH-$CH_2$-O-<br>\|<br>$C_2H_5$ | 1 | 95 | 1,5100 |
| 4 | $C_{13/15}H_{27/31}$-O-* | 1 | 72 | 1,5000 |
| 5 | 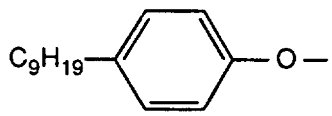 | 1 | 49 | 1,5374 |
| 6 | 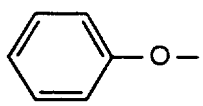 | 1 | 88 | 1,5685 |
| 7 | n-$C_{18}H_{37}$-O- | 1 | 95 | 47-50 |
| 8 | n-$C_8H_{17}$-CH-$CH_2$-O-<br>\|<br>n-$C_8H_{17}$ | 1 | 93 | 1,4969 |
| 9 | n-$C_{12}H_{25}$-CH-$CH_2$-O-<br>\|<br>n-$C_{10}H_{21}$ | 1 | 98 | 1,4925 |
| 10 | n-$C_{10}H_{24}$-CH-$CH_2$-O-<br>\|<br>n-$C_8H_{17}$ | 1 | 98 | 1,4937 |
| 11 | n-$C_6H_{13}$-CH-$CH_2$-O-<br>\|<br>n-$C_4H_9$ | 1 | 92 | 1,5032 |
| 12 | -O-$(CH_2)_{10}$-O- | 2 | 97 | 1,5348 |

Fortsetzung Tabelle 1

| Bsp. | A | n | Ausbeute [%] | $n_D^{20}$ |
|---|---|---|---|---|
| 13 | $-O-(CH_2CH_2O)_8-$ | 2 | 98 | 1,5219 |
| 14 | $-O-(CH_2CH_2O)_6-$ | 2 | 98 | Harz |
| 15 | $C_6H_5-CH_2CH_2CH_2O-$ | 1 | 98 | 1,5481*** |
| 16 | 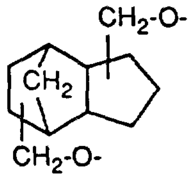 ** | 2 | 99 | Glas 1,5246**** |
| 17 | 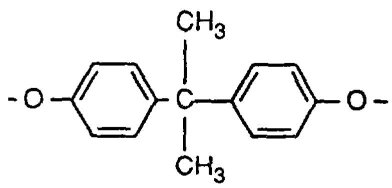 | 2 | 97 | Harz |
| 18 | 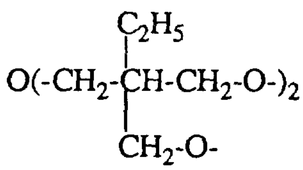 | 4 | 98 | Glas 1,5213**** |

*Der eingesetzte Alkohol ist ACROPOL® 35, ein Handelsprodukt der Fa. EXXON, welches aus einer Mischung von linearen $C_{13/15}$ primären Alkoholen mit mehr als 56% Linearität besteht (Chem. Abstr.-Nr. 67762-41-8*)

**Tricyclodecyldimethanol (TCD-DM-Alkohol, Farbwerke Hoechst), Gemisch isomerer tricyclischer primärer $C_{12}$-Diole

***Es wurde der Brechungsindex bei 40° C bestimmt.

****Zur Bestimmung des Brechungsindex wurde das Produkt in einer 50 %igen Lösung in Toluol untersucht

Beispiel 19:

186 g des gemäss Beispiel 1A als Zwischenprodukt hergestellten Phenyl-tetramethylolcyclohexanolbisphosphits werden mit 222 g Desmophen® 550 U in Gegenwart von 0,75 g Natriummethylat unter Stickstoff bei 120-160 °C/2 Pa umgestert, wobei das freigesetzte Phenol abdestilliert. Es werden 360 g eines hellen Harzes mit einer Viskosität von 4770 mPa·s (25 °C) als Produkt erhalten.

$^{31}P$-Kernresonanz-Spektrum

| | |
|---|---|
| $P^{\alpha}$ | 95,7 ppm |
| $P^{\beta}$ | 122,9 ppm |

Beispiele 20-26:

Die Verbindungen der Beispiele 20-26 werden analog zu der in Beispiel 19 beschriebenen Methode erhalten, indem Phenyl-tetramethylolcyclohexanol-bisphosphit mit den in der Tabelle 2 aufgeführten Polyetherpolyolen bzw. Polyether/esterpolyolen umgesetzt wird. Der folgenden Tabelle 2 sind sowohl die verwendeten Polyole als auch die physikalischen Eigenschaften der Produkte zu entnehmen.

Tabelle 2

| Bsp. | verwendetes Polyether(ester)polyol | P-Gehalt [%] | Viskosität mPa s | T[°C] |
|---|---|---|---|---|
| 20 | Voranol® -CP 1055 | 4,82 | 3180 | 25 |
| 21 | Desmophen® - 1140 U | 6,33 | 440 | 80 |
| 22 | Desmophen® - 1155 U | 4,45 | 290 | 80 |
| 23 | Voranol® - CP 455 | 8,26 | 240 | 80 |
| 24 | Voranol® - CP 755 | 6,12 | 155 | 80 |
| 25 | Lupranol ® - 3321 | 8,57 | 5190 | 80 |
| 26 | Lupranol ® - 3421 | 9,37 | 5980 | 80 |

Voranol, Produkt der Fa. DOW Chemical Comp.
Desmophen, Produkt der Fa. Bayer AG
Lupranol, Produkt der Fa. BASF

Beispiel 27: Dauerwalztest

Für die Prüfung in PVC wird folgende Grundrezeptur verwendet:

| | |
|---|---|
| 100 Teile | S-PVC ®Corvic S 71/102 (Fa. ICI) |
| 20 Teile | Dioctylphtalat |
| 2 Teile | Stabilisator |

Der Stabilisator ist eine Mischung aus Barium/Zink-carboxylaten/phenolaten mit einem Gehalt von 11,2% Ba und 2,2% Zn und enthält neben 10 % ®SHELL-SOL A (Fa. SHELL; Gemisch aromatischer Kohlenwasserstoffe mit einem Aromatengehalt von 98 % ; Siedebereich 165-185 °C, nach DIN 51751) als Lösungsmittel 24,3 % des Phosphits aus Beispiel 2 als Costabilisator.

Es wird ein Dauerwalztest bei 190 °C durchgeführt. Dazu wird die obige Mischung zunächst 5 Minuten auf einem Mischwalzwerk bei konstanter Temperatur (190 °C) plastifiziert. Danach werden in Zeitabständen von jeweils 5 Minuten 0,3 mm dicke Proben aus der Mitte der Folie geschnitten. Anschliessend wird der Yellowness-Index (ASTM-D 1925-70) dieser Proben bestimmt.

Die Ergebnisse sind in der nachfolgenden Tabelle 3 zusammengestellt.

Tabelle 3

| Walzzeit [min] | 5 | 10 | 15 | 20 | 25 | 30 | 35 | 40 | 45 | 50 | 55 | 60 |
|---|---|---|---|---|---|---|---|---|---|---|---|---|
| Yellowness Index | 5,7 | 6,4 | 8,0 | 9,7 | 12,4 | 17,1 | 20,8 | 22,0 | 23,3 | 22,9 | 23,3 | 22,5 |

Beispiel 28: Dauerwalztest

Das Phosphit aus Beispiel 19 wird in das in Beispiel 27 beschriebene Stabilisatorsystem eingearbeitet und wie in diesem Beispiel beschrieben einem Dauerwalztest unterzogen. Die Ergebnisse dieser Prüfung sind in Tabelle 4 zusammengefasst.

Tabelle 4

| Walzzeit [min] | 5 | 10 | 15 | 20 | 25 | 30 | 35 | 40 | 45 | 50 | 55 | 60 |
|---|---|---|---|---|---|---|---|---|---|---|---|---|
| Yellowness Index | 5,1 | 5,8 | 6,5 | 6,3 | 6,9 | 7,8 | 9,2 | 11,2 | 12,8 | 14,5 | 17,6 | 22,7 |

Beispiel 29: Brabender Test

100 Teile unstabilisiertes Polyethylen hoher Dichte (®Lupolen 5260 Z; BASF) in Pulverform werden mit 0,1 Teilen erfindungsgemässem Bisphosphit und 0,05 Teilen Pentaerythrittetra-[3-(3,5-di-tert-butyl-4-hydroxyphenyl)]-propionat trocken gemischt und in einem Brabender Plastographen bei 220 °C und 50 Umdrehungen pro Minute 20 Minuten geknetet. Dabei wird der Knetwiderstand durch den Verlauf der Drehmomentskurve bestimmt. Der Anstieg des Drehmomentes ist ein Zeichen der beginnenden Vernetzung des Polymeren. Die Zeit bis zum Anstieg (Induktionszeit) ist ein Mass für die Wirksamkeit des Verarbeitungsstabilisators. 1 Minute nach dem Drehmomentanstieg wird die Probe dem Brabender Plastographen entnommen und bei 180 °C zu einer 2 mm dicken Platte gepresst. Anschliessend wird der Yellowness Index dieser Platte bestimmt.

Die erhaltenen Messwerte gehen aus Tabelle 3 hervor.

Tabelle 3

| Bisphosphit aus Beispiel | Induktionszeit [min] | Yellowness Index |
|---|---|---|
| 1 | 24,5 | 2,0 |
| 2 | 30,0 | 0,7 |

Lange Induktionszeiten und tiefe Yellowness-Indices bedeuten gute Stabilisierung.

**Patentansprüche**

**1.** Verbindungen der Formel I

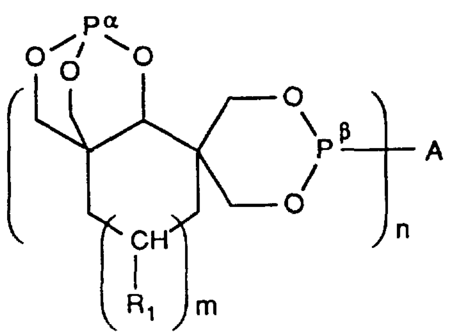

(I),

worin m 0, 1 oder 2 bedeutet,
n für 1 bis 6 steht,
$R_1$ Wasserstoff oder $C_1$-$C_4$-Alkyl darstellt und für den Fall, dass m = 2 ist die Reste $R_1$ gleich oder verschieden sind, und
A für den Rest eines mindestens n-wertigen Alkohols oder Phenols steht, wobei dieser über das (die) alkoholische(n) bzw. phenolische(n) O-Atom(e) an das (die) P-Atom(e) gebunden ist.

**2.** Verbindungen nach Anspruch 1, worin A, für den Fall, dass n = 1 ist, $-OR_2$ bedeutet, worin

$R_2$ unsubstituiertes oder mit $C_5$-$C_{12}$-Cycloalkyl, Morpholino, Piperidino, Piperazino, $C_6$-$C_{16}$-Alkylcycloalkyl,

Tetrahydrofuryl, Phenyl, Phenoxy oder/und $-NR_3R_4$ substituiertes $C_1$-$C_{24}$-Alkyl, durch ein oder mehrere -O-, -S- oder/und $-NR_5$-Einheiten unterbrochenes $C_2$-$C_{24}$-Alkyl, unsubstituiertes oder mit $C_1$-$C_6$-Alkyl substituiertes $C_5$-$C_{12}$-Cycloalkyl, unsubstituiertes oder mit $C_1$-$C_{18}$-Alkyl, Phenyl, Phenyl-$C_1$-$C_4$-Alkyl, Cyclopentyl, Cyclohexyl oder/und $C_2$-$C_4$-Alkenyl substituiertes Phenyl, Naphthyl, Biphenyl oder unsubstituiertes oder mit $C_1$-$C_4$-Alkoxy substituiertes Phenyl-$C_1$-$C_4$-Alkyl bedeutet,

$R_3$ und $R_4$ unabhängig voneinander Wasserstoff, $C_1$-$C_6$-Alkyl, Phenyl oder ($C_1$-$C_4$-Alkyl)phenyl bedeuten,

$R_5$ Wasserstoff, $C_1$-$C_6$-Alkyl oder Phenyl bedeutet,

A für den Fall, dass n = 2 ist, für einen Rest -O-Y-O- steht,

worin Y unsubstituiertes oder mit $R_6$ und/oder $R_7$ substituiertes $C_2$-$C_{20}$-Alkylen, $C_2$-$C_{20}$-Alkenylen, $C_3$-$C_4$-Alkinylen, $C_2$-$C_{20}$-Alkylen, welches durch O-Atome unterbrochen ist, $C_5$-$C_6$-Cycloalkylen, $C_7$-$C_{12}$-Alkylencycloalkylenalkylen, Phenylen, Naphthylen, 3,4-Tetrahydrofurylen,

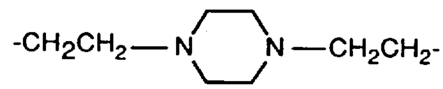

oder einen Rest -X-B-X- bedeutet,

X unsubstituiertes oder mit $C_1$-$C_4$-Alkyl substituiertes $C_1$-$C_{20}$-Alkylen,

$C_5$-$C_6$-Cycloalkylen, gegebenenfalls mit $C_1$-$C_4$-Alkyl oder $C_2$-$C_4$-Alkenyl substituiertes Phenylen oder einen Rest

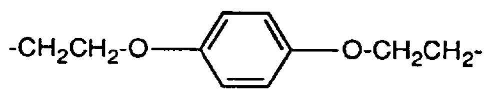

darstellt,

B eine direkte Bindung, $-CR_6R_7-$, -S-, - $SO_2$- oder $-NR_5$- bedeutet,

$R_6$ Wasserstoff oder $C_1$-$C_4$-Alkyl darstellt,

$R_7$ Wasserstoff, $C_1$-$C_4$-Alkyl oder $C_2$-$C_{12}$-Alkoxycarbonyl-$C_1$-$C_4$-alkyl bedeutet oder

A für

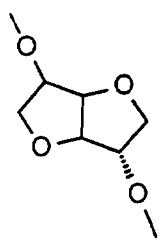

oder

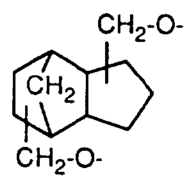

steht,

A, für den Fall, dass n = 3 ist

$N(CH_2CH_2O)_3$—, 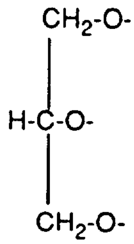 , 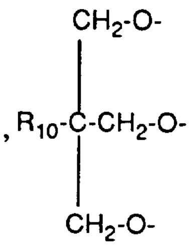 ,

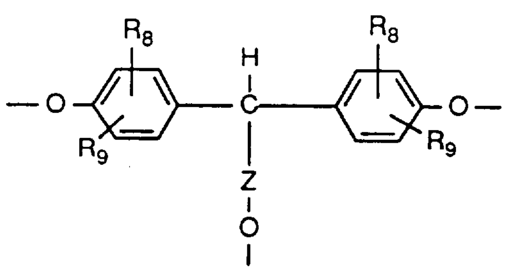

oder

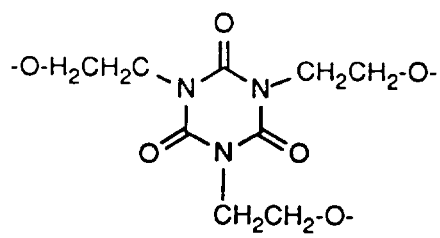

bedeutet,

$R_8$ und $R_9$ unabhängig voneinander für Wasserstoff oder $C_1$-$C_4$-Alkyl stehen,
$R_{10}$ $C_1$-$C_{24}$-Alkyl darstellt und
Z mit 1-4 $C_1$-$C_4$-Alkylgruppen substituiertes Phenylen-($C_1$-$C_4$-alkylen) bedeutet,
A, für den Fall, dass n = 4 ist

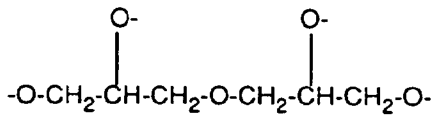 ,

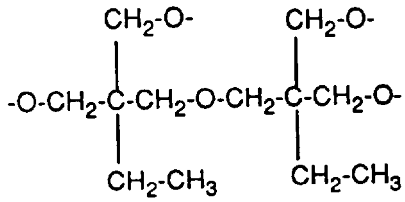 , 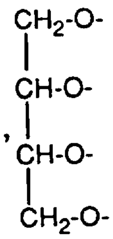 oder 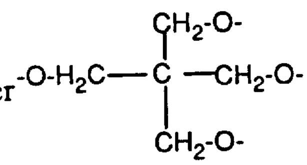

bedeutet und
A, für den Fall, dass n = 5 oder 6 ist ist

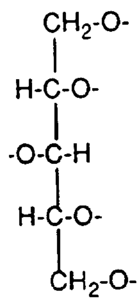 , 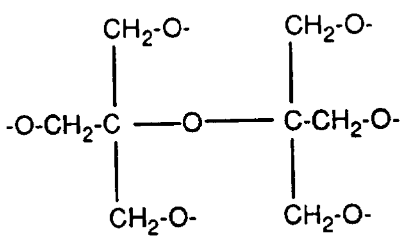

oder

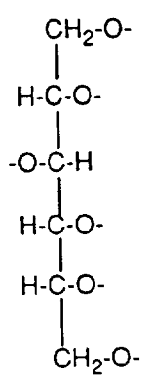

bedeutet.

**3.** Verbindungen nach Anspruch 1, worin m = 1 ist.

**4.** Verbindungen nach Anspruch 1, worin n = 1 ist.

**5.** Verbindungen nach Anspruch 4, worin $R_2$ unsubstituienes oder mit Phenyl substituiertes $C_1$-$C_{24}$-Alkyl, $C_2$-$C_{16}$-Alkyl welches durch ein oder mehrere -O-, -S- oder -NH-Einheiten unterbrochen sein kann, unsubstituiertes oder mit $C_1$-$C_4$-Alkyl substituiertes $C_5$-$C_{10}$-Cycloalkyl, unsubstituiertes oder mit $C_1$-$C_{18}$-Alkyl, Phenyl oder Phenyl-$C_1$-$C_4$-Alkyl substituiertes Phenyl, Naphtyl oder Phenyl-$C_1$-$C_4$-alkyl bedeutet.

6. Verbindungen nach Anspruch 5, worin $R_2$ unsubstituiertes oder mit Phenyl substituiertes $C_4$-$C_{20}$-Alkyl, $C_4$-$C_{12}$-Alkyl welches durch ein oder mehrere -O-, -S- oder -NH-Einheiten unterbrochen sein kann, unsubstituiertes oder mit $C_1$-$C_4$-Alkyl substituiertes $C_6$-$C_{10}$-Cycloalkyl, unsubstituiertes oder mit $C_1$-$C_{12}$-Alkyl, Phenyl oder Phenyl-$C_1$-$C_4$-alkyl substituiertes Phenyl oder Phenyl-$C_1$-$C_4$-alkyl bedeutet.

7. Verbindungen nach Anspruch 2, worin n > 1 ist, A für einen Rest -O-Y-O- steht,

   worin Y unsubstituiertes oder mit $R_6$ und/oder $R_7$ substituiertes $C_2$-$C_{20}$-Alkylen,
   $C_2$-$C_{20}$-Alkylen, welches durch O-Atome unterbrochen ist,
   $C_7$-$C_{12}$-Alkylencycloalkylenalkylen, Phenylen, Naphthylen oder einen Rest -X-B-X-bedeutet,
   X unsubstituiertes oder mit $C_1$-$C_4$-Alkyl substituiertes $C_1$-$C_{20}$-Alkylen, gegebenenfalls mit $C_1$-$C_4$-Alkyl oder $C_2$-$C_4$-Alkenyl substituiertes Phenylen darstellt,
   B eine direkte Bindung, $-NR_5-$, -S- oder $-CR_6R_7-$ bedeutet,
   oder A für

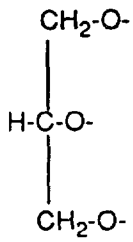
,
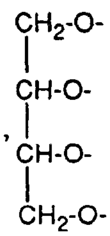
,
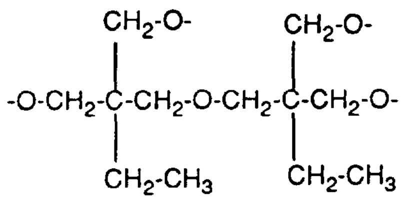
,
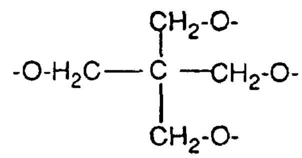

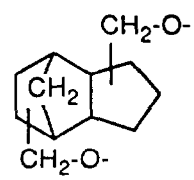
oder
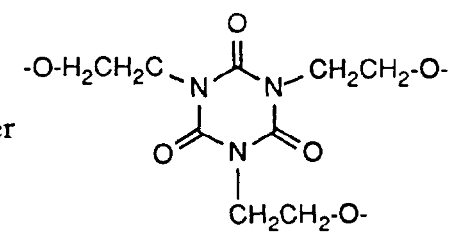

   steht.

8. Verbindungen nach Anspruch 1, worin A den Rest eines n-wertigen linearen oder cyclischen Zuckers bedeutet, wobei nicht alle OH-Gruppen des Zuckers mit einem Bisphosphit-Rest verestert sind.

9. Verbindung erhältlich durch Umsetzung von Verbindungen der Formel II

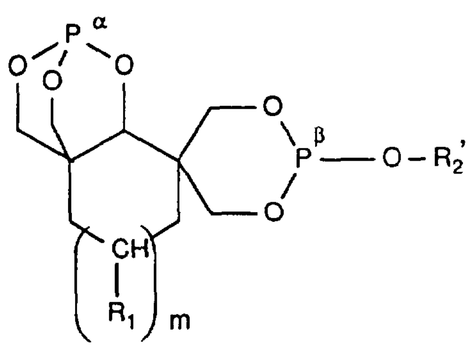
(II),

   worin m 0, 1 oder 2 bedeutet, $R_1$ Wasserstoff oder $C_1$-$C_4$-Alkyl darstellt und für den Fall, dass m = 2 ist die Reste $R_1$ gleich oder verschieden sind und $R_2'$Phenyl, $C_1$-$C_{12}$-Alkylphenyl oder $C_1$-$C_4$-Alkyl bedeutet,
   mit einer Polyetherpolyol- oder Polyether/esterpolyol-Verbindung, wobei die Hydroxyfunktionen der Polyetherpolyol- oder Polyether/esterpolyol-Verbindung teilweise oder vollständig mit dem Rest

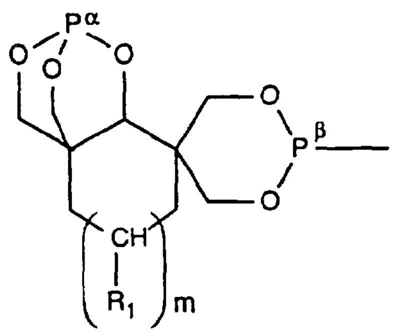

verestert sind.

10. Verbindungen nach Anspruch 9, worin die Polyetherpolyol- oder Polyether/esterpolyol-Verbindung ein Polyol auf Basis von Propylenoxid ist.

11. Zusammensetzungen enthaltend (a) ein gegen oxidativen, thermischen und/oder lichtinduzierten Abbau empfindliches organisches Material und (b) mindestens eine Verbindung der Formel I nach Anspruch 1 oder eine gemäss Anspruch 9 erhaltene Verbindung.

12. Zusammensetzungen nach Anspruch 11 neben Verbindungen der Formel I oder gemäss Anspruch 9 erhaltenen Verbindungen zusätzlich enthaltend übliche Mengen weiterer Additive.

13. Zusammensetzungen nach Anspruch 12 enthaltend als Komponente (a) natürliche, halbsynthetische oder synthetische, insbesondere thermoplastische Polymere.

14. Zusammensetzungen nach Anspruch 13 enthaltend als Komponente (a) ein Polyolefin, insbesondere ein Polyvinylchlorid, ein Polyethylen oder Polypropylen.

15. Zusammensetzungen nach Anspruch 13 enthaltend als Komponente (a) einen Schmierstoff oder eine Hydraulikflüssigkeit.

16. Verwendung der Verbindungen der Formel I nach Anspruch 1 oder der gemäss Anspruch 9 erhaltenen Verbindungen zum Stabilisieren gegen oxidativen, thermischen und/oder actinischen Abbau empfindlichen organischen Materials.

17. Verwendung von Verbindungen der Formel I nach Anspruch 1 oder der gemäss Anspruch 9 erhaltenen Verbindungen als Verarbeitungsstabilisatoren für thermoplastische Polymere, insbesondere für Polyolefine.

18. Verwendung von Verbindungen nach einem der Ansprüche 9 oder 10 zur Herstellung von Giessharzen, Laminaten, als Bindemittel für die Herstellung von Honigwabenstrukturen oder als klebstoff.

19. Verfahren zum Schützen von organischem Material gegen oxidativen, thermischen und/oder actinischen Abbau, dadurch gekennzeichnet, dass man diesem Material als Stabilisatoren Verbindungen der Formel I nach Anspruch 1 oder gemäss Anspruch 9 erhaltene Verbindungen zusetzt bzw. auf dieses aufbringt.

**Claims**

1. A compound of formula I

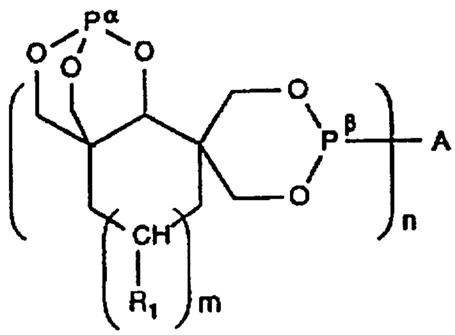 (I),

wherein m is 0, 1 or 2,
n is 1 to 6,
$R_1$ is hydrogen or $C_1$-$C_4$alkyl and, if m = 2, the radicals $R_1$ are identical or different, and A is the radical of an at least n-hydric alcohol or phenol, which radical is attached to the P atom or atoms through the alcoholic or phenolic O atom or atoms.

**2.** A compound according to claim 1, wherein A, if n = 1, is -$OR_2$, wherein

$R_2$ is $C_1$-$C_{24}$alkyl, unsubstituted or substituted by $C_5$-$C_{12}$cycloalkyl, morpholino, piperidino, piperazino, $C_6$-$C_{16}$alkylcycloalkyl, tetrahydrofuryl, phenyl, phenoxy and/or -$NR_3R_4$; $C_2$-$C_{24}$alkyl which is interrupted by one or more -O-, -S- and/or -$NR_5$- units, unsubstituted or $C_1$-$C_6$alkyl-substituted $C_5$-$C_{12}$cycloalkyl; phenyl, naphthyl or biphenyl. each unsubstituted or substituted by $C_1$-$C_{18}$alkyl, phenyl, phenyl-$C_1$-$C_4$alkyl, cyclopentyl, cyclohexyl and/or $C_2$-$C_4$alkenyl; or unsubstituted or $C_1$-$C_4$alkoxy-substituted phenyl-$c_1$-$C_4$alkyl,
$R_3$ and $R_4$ are each independently of the other hydrogen, $C_1$-$C_6$alkyl, phenyl or ($C_1$-$C_4$alkyl)phenyl,
$R_5$ is hydrogen, $C_1$-$C_6$alkyl or phenyl,
A, if n = 2, is a radical -O-Y-O-,
wherein Y is $C_2$-$C_{20}$alkylene, $C_2$-$C_{20}$alkenylene or $C_3$-$C_4$alkynylene, each unsubstituted or substituted by $R_6$ and/or $R_7$, $C_2$-$C_{20}$alkylene which is interrupted by O atoms, $C_5$-$C_6$cycloalkylene, $C_7$-$C_{12}$alkylenecyclo-alkylenealkylene, phenylene, naphthylene, 3,4-tetrahydrofurylene,

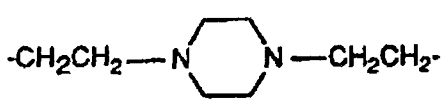

or is a radical -X-B-X-,
X is unsubstituted or $C_1$-$C_4$alkyl-substituted $C_1$-$C_{20}$alkylene, $C_5$-$C_6$cycloalkylene, phenylene or phenylene which is substituted by $C_1$-$C_4$alkyl or $C_2$-$C_4$alkenyl, or is a radical

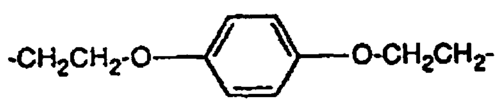 ,

B is a direct bond, -$CR_6R_7$-F -S-, -$SO_2$- or -$NR_5$-,
$R_6$ is hydrogen or $C_1$-$C_4$alkyl,
$R_7$ is hydrogen, $C_1$-$C_4$alkyl or $C_2$-$C_{12}$alkoxycarbonyl-$C_1$-$C_4$alkyl, or
A is

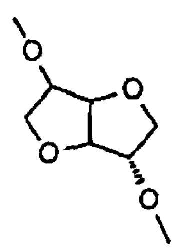 or 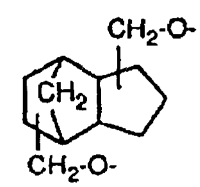

A, if n = 3, is

$N(CH_2CH_2O)_3-$, 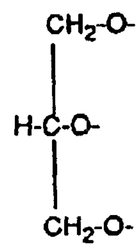 , 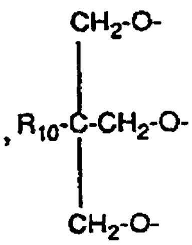 ,

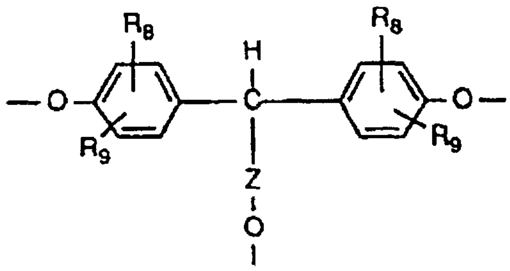 or 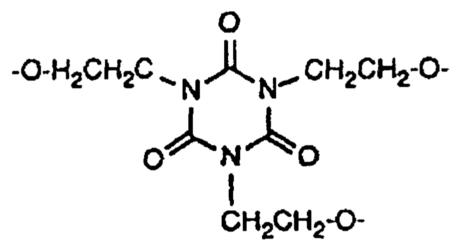

$R_8$ and $R_9$ are each independently of the other hydrogen or $C_1$-$C_4$alkyl,
$R_{10}$ is $C_1$-$C_{24}$alkyl and
Z is phenylene-($C_1$-$C_4$alkylene) which is substituted by 1 to 4 $C_1$-$C_4$alkyl groups,
A, if n = 4, is

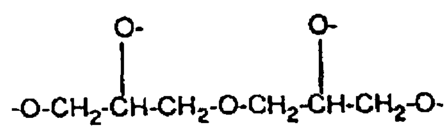 ,

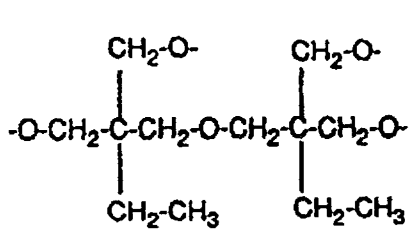 , 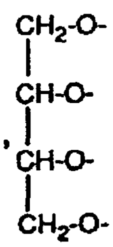 or 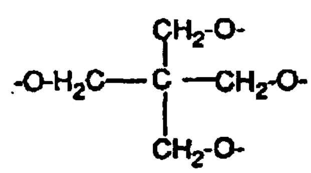 ,

and
A, if n = 5 or 6, is

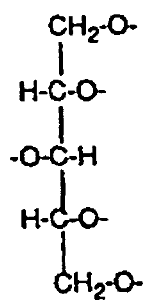 , 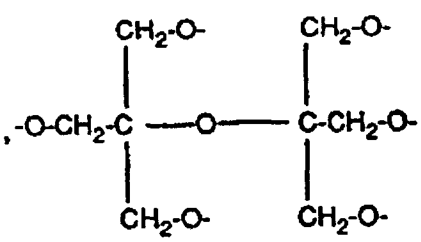

or

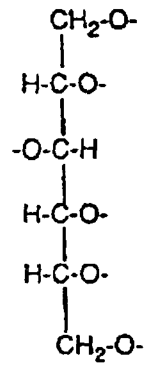

3. A compound according to claim 1, wherein m is 1.

4. A compound according to claim 1, wherein n is 1.

5. A compound according to claim 4, wherein $R_2$ is unsubstituted or phenyl-substituted $C_1$-$C_{24}$alkyl, $C_2$-$C_{16}$alkyl which may be interrupted by one or more -O-,-S- or -NH- units, unsubstituted or $C_1$-$C_4$alkyl-substituted $C_5$-$C_{10}$cycloalkyl, unsubstituted phenyl or phenyl which is substituted by $C_1$-$C_{18}$alkyl, phenyl or phenyl-$C_1$-$C_4$alkyl, or is naphthyl or phenyl-$C_1$-$C_4$alkyl.

6. A compound according to claim 5, wherein $R_2$ is unsubstituted or phenyl-substituted $C_4$-$C_{20}$alkyl, $C_4$-$C_{12}$alkyl which may be interrupted by one or more -O-, -S- or -NH- units, unsubstituted or $C_1$-$C_4$alkyl-substituted $C_6$-$C_{10}$cycloalkyl, unsubstituted phenyl or phenyl which is substituted by $C_1$-$C_{12}$alkyl, phenyl or phenyl-$C_1$-$C_4$alkyl, or is phenyl-$C_1$-$C_4$alkyl.

7. A compound according to claim 2, wherein n > 1, A is a radical -O-Y-O-, wherein Y is unsubstituted $C_2$-$C_{20}$alkylene or $C_2$-$C_{20}$alkylene which is substituted by $R_6$ and/or $R_7$, $C_2$-$C_{20}$alkylene which is interrupted by O atoms, $C_7$-$C_{12}$alkylenecycloalkylenealkylene, phenylene, naphthylene or a radical -X-B-X-,

X is unsubstituted or $C_1$-$C_4$alkyl-substituted $C_1$-$C_{20}$alkylene, phenylene or phenylene which is substituted by $C_1$-$C_4$alkyl or $C_2$-$C_4$alkenyl,
B is a direct bond, -$NR_5$-, -S- or -$CR_6R_7$-,
or A is

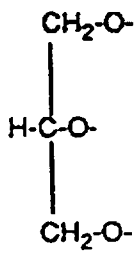 , 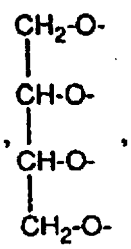 , 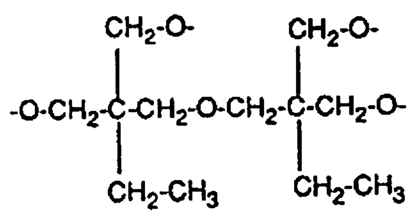 , 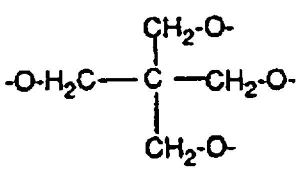

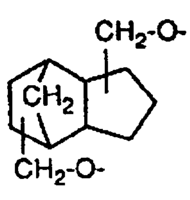 or 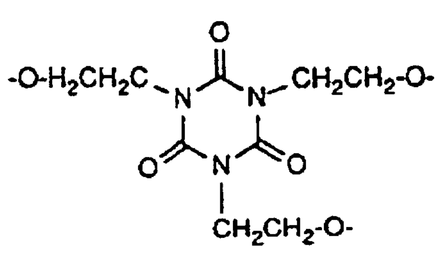 .

8. A compound according to claim 1, wherein A is the radical of an n-hydric linear or cyclic sugar in which not all OH

groups of the sugar are esterified with a bisphosphite radical.

**9.** A compound which is obtainable by reacting a compound of formula II

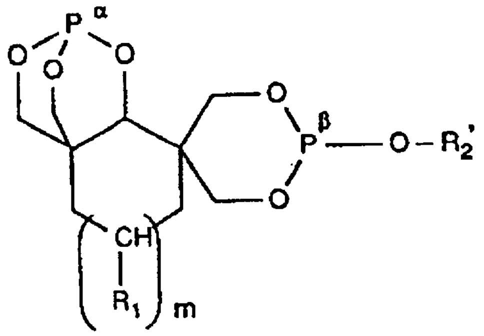

(II),

wherein m is 0, 1 or 2, $R_1$ is hydrogen or $C_1$-$C_4$alkyl and, if m = 2, the radicals $R_1$ are identical or different, and $R_2$' is phenyl,
$C_1$-$C_{12}$alkylphenyl or $C_1$-$C_4$alkyl,
with a polyether polyol or polyether/ester polyol compound, the hydroxy functions of the polyether polyol or polyether/ester polyol compound being partially or completely esterified with the radical

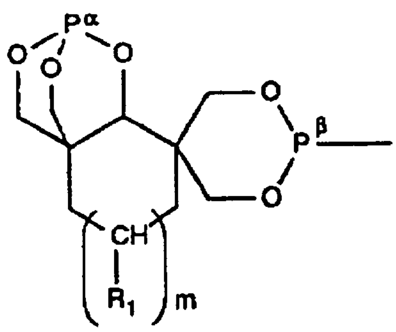

**10.** A compound according to claim 9, wherein the polyether polyol or polyether/ester polyol compound is a polyol based on propylene oxide.

**11.** A composition comprising (a) an organic material which is susceptible to oxidative, thermal and/or light-induced degradation, and (b) at least one compound of formula I according to claim 1 or a compound obtained according to claim 9.

**12.** A composition according to claim 11 which contains, in addition to a compound of formula I or a compound obtained according to claim 9, customary amounts of further additives.

**13.** A composition according to claim 12, wherein component (a) is a natural, semisynthetic or synthetic, especially thermoplastic, polymer.

**14.** A composition according to claim 13, wherein component (a) is a polyolefin, preferably a polyvinyl chloride, a polyethylene or polypropylene.

**15.** A composition according to claim 13, wherein component (a) is a lubricant or a hydraulic fluid.

**16.** Use of a compound of formula I according to claim 1 or of a compound obtained according to claim 9 for stabilising organic material which is susceptible to oxidative, thermal and/or actinic degradation.

**17.** Use of a compound of formula I according to claim 1 or of a compound obtained according to claim 9 as processing stabiliser for thermoplastic polymers, especially for polyolefins.

**18.** Use of a compound according to one of claims 9 or 10 for making casting resins or laminates, or as binder for the

fabrication of honeycomb structures or as adhesive.

**19.** A process for protecting organic material against oxidative, thermal and/or actinic degradation, which comprises adding or applying to said material a compound of formula I according to claim 1 or a compound obtained according to claim 9 as stabiliser.

## Revendications

**1.** Composés de formule I

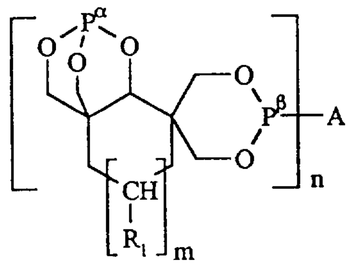

(I),

dans laquelle m est 0, 1 ou 2,
n représente un nombre de 1 à 6,
$R_1$ représente un atome d'hydrogène ou un reste alkyle en $C_1$-$C_4$ et, dans le cas où m est 2, les restes $R_1$ sont identiques ou différents, et
A représente le reste d'un alcool ou phénol ayant au moins n fonctions alcool ou phénol, qui est relié à l'atome ou aux atomes de phosphore par l'intermédiaire de l'atome d'oxygène ou des atomes d'oxygène alcooliques ou phénoliques.

**2.** Composés selon la revendication 1, dans lesquels

dans le cas où n est 1, A est un reste $-OR_2$, dans lequel
$R_2$ représente un reste alkyle en $C_1$-$C_{24}$ non substitué ou substitué par cycloalkyle en $C_5$-$C_{12}$, morpholino, pipéridino, pipérazino, alkylcycloalkyle en $C_6$-$C_{16}$, tétrahydrofuryle, phényle, phénoxy ou/et $-NR_3R_4$, un reste alkyle en $C_2$-$C_{24}$ interrompu par une ou plusieurs unités -O-, -S- ou/et $-NR_5$-, un reste cycloalkyle en $C_5$-$C_{12}$ non substitué ou substitué par alkyle en $C_1$-$C_6$, un reste phényle non substitué ou substitué par alkyle en $C_1$-$C_{18}$, phényle, phényl(alkyle en $C_1$-$C_4$), cyclopentyle, cyclohexyle et/ou alcényle en $C_2$-$C_4$, un reste naphtyle, un reste biphényle ou un reste phényl(alkyle en $C_1$-$C_4$) non substitué ou substitué par alcoxy en $C_1$-$C_4$.
$R_3$ et $R_4$ représentent indépendamment l'un de l'autre un atome d'hydrogène ou un reste alkyle en $C_1$-$C_6$, phényle ou (alkyl en $C_1$-$C_4$)phényle,
$R_5$ représente un atome d'hydrogène ou un reste alkyle en $C_1$-$C_6$ ou phényle,
dans le cas où n = 2, A est un reste -O-Y-O-, dans lequel
Y représente un reste alkylène en $C_2$-$C_{20}$ non substitué ou substitué par $R_6$ et/ou $R_7$, un reste alcénylène en $C_2$-$C_{20}$, un reste alcynylène en $C_3$-$C_4$, un reste alkylène en $C_2$-$C_{20}$ interrompu par des atomes d'oxygène, un reste cycloalkylène en $C_5$-$C_6$, un reste alkylènecycloalkylène-alkylène en $C_7$-$C_{12}$, un reste phénylène, un reste naphtylène, un reste 3,4-tétrahydrofurylène, un reste

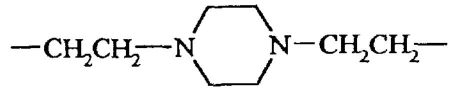

ou un reste -X-B-X-,
X représente un reste alkylène en $C_1$-$C_{20}$ non substitué ou substitué par alkyle en $C_1$-$C_4$, un reste cycloalkylène en $C_5$-$C_6$, un reste phénylène éventuellement substitué par alkyle en $C_1$-$C_4$ ou alcényle en $C_2$-$C_4$ ou un reste

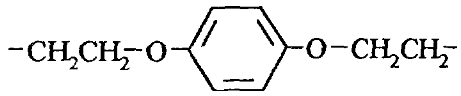

,

B est une liaison directe, $-CR_6R_7$-, -S-, $-SO_2$- ou $-NR_5$-,

$R_6$ représente un atome d'hydrogène ou un reste alkyle en $C_1$-$C_4$,
$R_7$ représente un atome d'hydrogène, un reste alkyle en $C_1$-$C_4$ ou (alcoxycarbonyl en $C_2$-$C_{12}$)(alkyle en $C_1$-$C_4$)
ou
A représente un reste

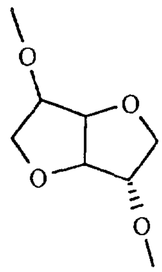
ou
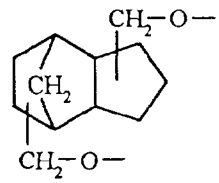
,

dans le cas où n = 3, A est $N(CH_2CH_2O)_3$-,

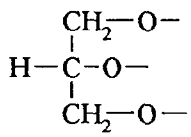
,
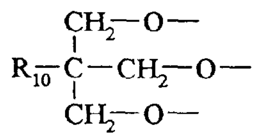
,

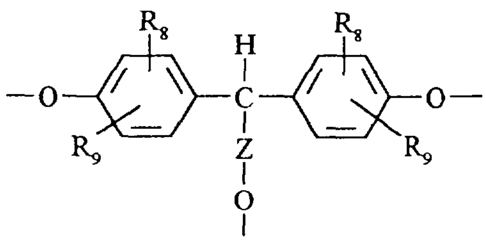
ou
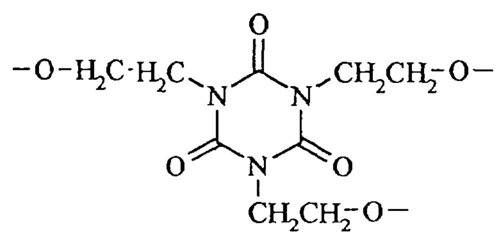
,

$R_8$ et $R_9$ représentent indépendamment l'un de l'autre un atome d'hydrogène ou un reste alkyle en $C_1$-$C_4$,
$R_{10}$ représente un reste alkyle en $C_1$-$C_{24}$ et
Z représente un reste phénylène(alkylène en $C_1$-$C_4$) substitué par 1 à 4 groupes alkyle en $C_1$-$C_4$,
dans le cas où n = 4, A est

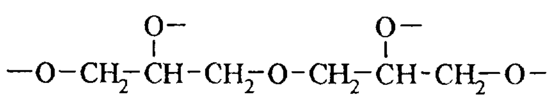
,

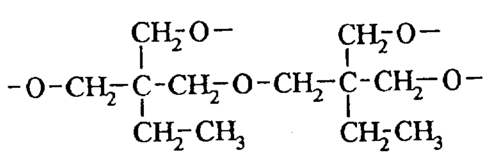
,
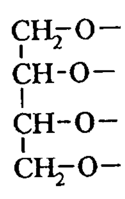
, ou
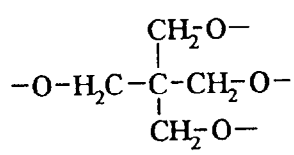

et
dans le cas où n = 5 ou 6, A est

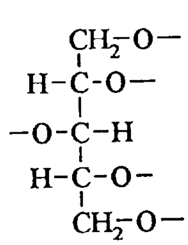
,
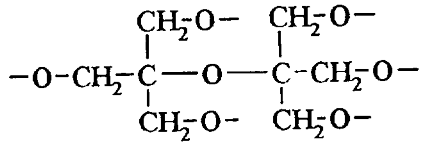

ou

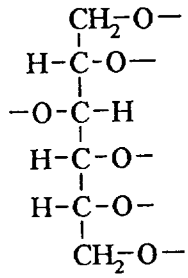 .

**3.** Composés selon la revendication 1, dans lesquels m est égal à 1.

**4.** Composés selon la revendication 1, dans lesquels n est égal à 1.

**5.** Composés selon la revendication 4, dans lesquels $R_2$ représente un reste alkyle en $C_1$-$C_{24}$ non substitué ou substitué par phényle, un reste alkyle en $C_2$-$C_{16}$ qui peut être interrompu par une ou plusieurs unités -O-, -S- ou -NH-, un reste cycloalkyle en $C_5$-$C_{10}$ non substitué ou substitué par alkyle en $C_1$-$C_4$, un reste phényle non substitué ou substitué par alkyle en $C_1$-$C_{18}$, phényle ou phényl(alkyle en $C_1$-$C_4$), un reste naphtyle ou un reste phényl(alkyle en $C_1$-$C_4$).

**6.** Composés selon la revendication 5, dans lesquels $R_2$ est un reste alkyle en $C_4$-$C_{20}$ non substitué ou substitué par phényle, un reste alkyle en $C_4$-$C_{12}$ qui peut être interrompu par une ou plusieurs unités -O-, -S- ou -NH-, un reste cycloalkyle en $C_6$-$C_{10}$ non substitué ou substitué par alkyle en $C_1$-$C_4$, un reste phényle non substitué ou substitué par alkyle en $C_1$-$C_{12}$, phényle ou phényl(alkyle en $C_1$-$C_4$) ou un reste phényl(alkyle en $C_1$-$C_4$).

**7.** Composés selon la revendication 2, dans lesquels n est supérieur à 1, A est un reste -O-Y-O- dans lequel

Y représente un reste alkylène en $C_2$-$C_{20}$ non substitué ou substitué par $R_6$ et/ou $R_7$, un reste alkylène en $C_2$-$C_{20}$ interrompu par des atomes d'oxygène, un reste alkylènecycloalkylène-alkylène en $C_7$-$C_{12}$, un reste phénylène, un reste naphtylène ou un reste -X-B-X-,
X représente un reste alkylène en $C_1$-$C_{20}$ non substitué ou substitué par alkyle en $C_1$-$C_4$, ou un reste phénylène éventuellement substitué par alkyle en $C_1$-$C_4$ ou alcényle en $C_2$-$C_4$,
B est une liaison directe, $-NR_5-$, -S- ou $-CR_6R_7$,
ou bien A représente

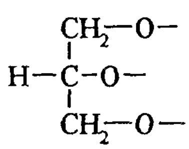 , 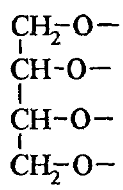 ,

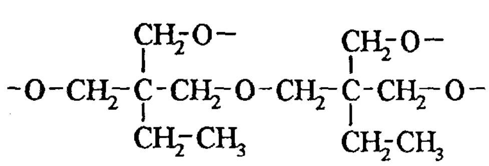 , 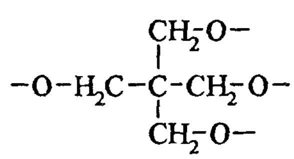 , 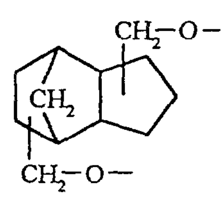

ou

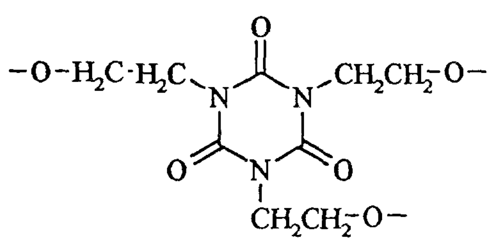 .

**8.** Composés selon la revendication 1, dans lesquels A est le reste d'un sucre linéaire ou cyclique de valence n, dans lequel les groupes OH du sucre ne sont pas tous estérifiés par un reste bisphosphite.

**9.** Composé pouvant être obtenu par réaction de composés de formule II

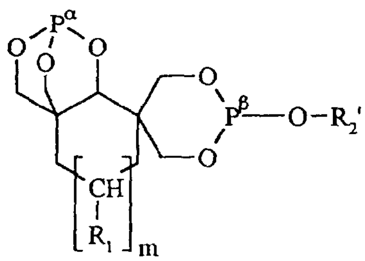

(II),

dans laquelle m est 0, 1 ou 2, $R_1$ représente un atome d'hydrogène ou un reste alkyle en $C_1$-$C_4$ et, dans le cas où m est 2, les restes $R_1$ sont identiques ou différents, et $R_2$' représente un reste phényle, (alkyl en $C_1$-$C_{12}$)phényle ou alkyle en $C_1$-$C_4$,
avec un composé de type polyétherpolyol ou polyéther/esterpolyol, les fonctions hydroxy du composé polyétherpolyol ou polyéther/esterpolyol étant partiellement ou totalement estérifiées avec le reste

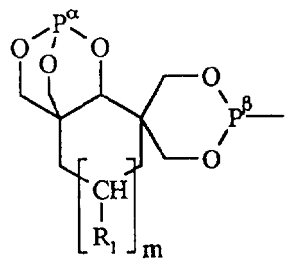

.

**10.** Composés selon la revendication 9, dans lesquels le composé polyétherpolyol ou polyéther/esterpolyol est un polyol à base d'oxyde de propylène.

**11.** Compositions contenant (a) une matière organique sensible à la dégradation due à l'oxydation, à la chaleur et/ou à la lumière et (b) au moins un composé de formule I selon la revendication 1 ou un composé obtenu selon la revendication 9.

**12.** Compositions selon la revendication 11 contenant, en plus des composés de formule I ou des composés obtenus selon la revendication 9, des quantités habituelles d'autres additifs.

**13.** Compositions selon la revendication 12 contenant comme constituant (a) des polymères naturels, semi-synthétiques ou synthétiques, en particulier thermoplastiques.

**14.** Compositions selon la revendication 13 contenant comme constituant (a) une polyoléfine, en particulier un poly (chlorure de vinyle), un polyéthylène ou un polypropylène.

**15.** Compositions selon la revendication 13 contenant comme constituant (a) un lubrifiant ou un liquide hydraulique.

**16.** Utilisation des composés de formule I selon la revendication 1 ou des composés obtenus selon la revendication 9 pour la stabilisation d'une matière organique sensible à la dégradation due à l'oxydation, la chaleur et/ou la lumière.

**17.** Utilisation de composés de formule I selon la revendication 1 ou de composés obtenus selon la revendication 9 comme stabilisants pendant la mise en forme pour des polymères thermoplastiques, en particulier pour des polyoléfines.

**18.** Utilisation de composés selon l'une des revendications 9 ou 10 pour la préparation de résines de coulée, de stratifiés, comme liants pour la préparation de structures en nids d'abeilles ou comme colles.

**19.** Procédé pour protéger une matière organique contre la dégradation due à l'oxydation, la chaleur et/ou la lumière,

caractérisé en ce que l'on ajoute à cette matière ou on applique sur cette matière, en tant que stabilisants, des composés de formule I selon la revendication 1 ou des composés obtenus selon la revendication 9.